(19) Europäisches Patentamt / European Patent Office / Office européen des brevets

(11) **EP 3 766 115 B1**

(12) **FASCICULE DE BREVET EUROPEEN**

(45) Date de publication et mention
de la délivrance du brevet:
**18.10.2023 Bulletin 2023/42**

(21) Numéro de dépôt: **19728499.5**

(22) Date de dépôt: **06.05.2019**

(51) Classification Internationale des Brevets (IPC):
*H01G 11/24* (2013.01)   *H01G 11/46* (2013.01)
*H01G 11/86* (2013.01)   *H01M 4/04* (2006.01)
*H01G 11/28* (2013.01)   *H01M 4/1391* (2010.01)
*H01M 4/1397* (2010.01)   *H01M 10/0585* (2010.01)
*H01M 6/40* (2006.01)   *H01M 10/0525* (2010.01)
*H01M 10/04* (2006.01)

(52) Classification Coopérative des Brevets (CPC):
**H01M 4/0404; H01G 11/24; H01G 11/28;
H01G 11/46; H01G 11/86; H01M 4/043;
H01M 4/0457; H01M 4/1391; H01M 4/1397;
H01M 10/0436; H01M 10/0525; H01M 10/0585;**
H01M 6/40; Y02E 60/10; Y02P 70/50

(86) Numéro de dépôt international:
**PCT/FR2019/051028**

(87) Numéro de publication internationale:
**WO 2019/215407 (14.11.2019 Gazette 2019/46)**

(54) **ELECTRODES POREUSES POUR DISPOSITIFS ELECTROCHIMIQUES**

PORÖSE ELEKTRODEN FÜR ELEKTROCHEMISCHE VORRICHTUNGEN

ELECTRODES POREUSES POUR DISPOSITIFS ELECTROCHIMIQUES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.05.2018 FR 1853920**

(43) Date de publication de la demande:
**20.01.2021 Bulletin 2021/03**

(73) Titulaire: **I-TEN
69570 Dardilly (FR)**

(72) Inventeur: **GABEN, Fabien
69570 DARDILLY (FR)**

(74) Mandataire: **Schmidt, Martin Peter
IXAS Conseil
22 avenue René Cassin
69009 Lyon (FR)**

(56) Documents cités:
**US-A1- 2011 269 025   US-A1- 2014 178 759
US-A1- 2018 108 904**

**Description**

**Domaine technique de l'invention**

L'invention concerne le domaine de l'électrochimie, particulièrement les systèmes électrochimiques et plus particulièrement les systèmes électrochimiques en couches minces. Elle concerne plus précisément les électrodes utilisables dans des systèmes électrochimiques tels que des batteries à haute puissance (notamment des batteries à ions de lithium), des supercondensateurs, des piles à combustible, et des cellules photovoltaïques. Elle s'applique aux anodes et aux cathodes. L'invention porte sur des électrodes poreuses ; elles peuvent être imprégnées d'un électrolyte liquide.

L'invention concerne également un procédé de préparation d'une telle électrode poreuse, de préférence en couche mince, qui met en oeuvre des nanoparticules d'un matériau d'électrode, et les électrodes ainsi obtenues. L'invention concerne également un procédé de fabrication d'un dispositif électrochimique comprenant au moins une de ces électrodes, et les dispositifs ainsi obtenus.

**État de la technique**

Il existe de nombreuses technologies pour stocker de l'énergie électrique ; pour une application donnée le choix dépend surtout du besoin de puissance (exprimé en W) et du besoin en énergie (exprimé en Wh). A titre d'exemple, si l'on recherche une forte puissance sur un temps relativement court, les condensateurs ou supercondensateurs peuvent être une bonne solution. Ils sont constitués de deux électrodes poreuses (le plus souvent en charbon actif pour assurer une bonne conductivité électronique) séparées par une membrane isolante ; les électrodes sont immergées dans un électrolyte qui formera à la surface des électrodes une double couche électrique capable de stocker l'énergie électrique. Ces dispositifs se caractérisent par un temps de charge et de décharge très rapide.

Le stockage d'énergie électrique utilisé dans les véhicules électriques, téléphones mobiles ou dans des ordinateurs doit répondre à des besoins différents, à savoir une puissance élevée fournie sur un temps assez long. On utilise alors souvent des batteries à ions de lithium. Elles sont constituées d'une électrode positive, d'un électrolyte et d'une électrode négative. Au cours leur fonctionnement, des ions de lithium sont transportés de l'une à l'autre des électrodes à travers l'électrolyte. Lors de la décharge de la batterie, une quantité de lithium réagit avec la matière active d'électrode positive à partir de l'électrolyte, et une quantité équivalente d'ions de lithium est introduite dans l'électrolyte à partir de la matière active de l'électrode négative, la concentration en ions de lithium restant ainsi constante dans l'électrolyte. L'insertion du lithium dans le matériau formant l'électrode positive est compensée par l'apport d'électrons à partir de l'électrode négative via un circuit extérieur ; ainsi la batterie peut fournir un courant électrique. Lors de la charge, les phénomènes inverses ont lieu. Différents types d'électrodes peuvent être utilisées dans des batteries, notamment des électrodes denses telles que présentées dans la demande US 2018 108 904 A1, des électrodes comprenant une matière active, un matériau conducteur et un liant telles que présentées dans la demande US 2011 269 025 A1 ou encore des électrodes carbonées sans liant comme présentées dans la demande US 2014 178 759 A1.

La densité de puissance des batteries à ions de lithium est globalement inférieure à celle des supercondensateurs à cause de la diffusion assez lente des ions de lithium dans l'épaisseur des matériaux actifs (électrodes, électrolyte) et du temps de transport des ions de lithium dans l'électrolyte. La capacité de stockage d'une batterie à ions de lithium dépend entre autres de ses électrodes, notamment de la quantité de matière active présente au sein des électrodes et dans une moindre mesure de leur épaisseur : à densité et surface égale, plus les électrodes sont épaisses plus grande sera la capacité de stockage d'énergie de la batterie. Cependant, la résistance interne (résistance série) de la batterie augmente avec l'épaisseur des couches.

Pour dépasser les performances des batteries à ions de lithium conventionnelles, on recherche des matériaux ayant une capacité de stockage élevée et une puissance de charge-décharge élevée. Plus précisément, on souhaite disposer de batteries présentant une forte densité d'énergie, une forte densité de puissance, et une grande longévité (exprimée en durée de vie calendaire et en nombre de cycles de décharge et charge); pour certaines utilisations on recherche des batteries qui fonctionnent bien à très basse température (sachant que la résistance série interne à la batterie augmente lorsque la température baisse). Par ailleurs, la batterie, compte tenu de l'énergie importante qu'elle est susceptible de stocker, ne doit pas présenter un risque de sécurité en cas de dysfonctionnement ; par exemple elle ne doit pas s'enflammer. Et enfin, les divers constituants d'une batterie au lithium doivent être choisis de manière à pouvoir produire, avec des procédés robustes et peu onéreux, des batteries à bas coût de revient.

On connaît des cellules électrochimiques telles que des batteries à ions de lithium utilisant des particules de matériaux actifs d'électrode de taille micrométrique liées par un liant organique. WO 02/075 826 divulgue des électrodes pour cellules électrochimiques constituées d'un matériau d'électrode mésostructuré et d'un liant organique. Le liant organique étant un isolant électronique, on le charge de particules de carbone, un conducteur électronique. Ces électrodes comprennent une structure tridimensionnelle mésoporeuse pouvant être imprégnée par un électrolyte de manière à former une jonction de grande surface spécifique. La structure tridimensionnelle de l'électrode permet de surmonter le problème de la diffusion ionique dans l'électrolyte, inhérent aux électrodes classiques à grande surface active, et d'assurer l'interconnectivité ainsi que l'accès de l'électrolyte organique liquide à l'espace poreux entier. La stabilité mécanique de la structure est essentiellement assurée par le liant organique au sein de l'électrode mésoporeuse.

La présence de liant organique est une caractéristique essentielle des électrodes décrites dans WO 02/075 826, mais elle présente plusieurs inconvénients. Le liant organique chargé de particules électriquement conductrices peut donner lieu à des défaillances lors du cyclage thermique : les particules de matériau d'électrode reliées entre elles par le liant organique peuvent perdre localement le contact électrique, ce qui conduit à une augmentation progressive de la résistance série de la batterie. La présence d'un liant organique limite aussi la température de travail de la batterie, et présente toujours un risque d'incendie.

Et enfin, la présence d'un liant organique peut être incompatible avec certains procédés de fabrication, et notamment avec ceux qui impliquent un dépôt sous vide et/ou un dépôt à température élevée. En particulier, la présence d'un liant organique ne permet pas la réalisation ultérieure de dépôts d'une couche diélectrique par la technique de dépôt de couches atomiques (« Atomic Layer Déposition » en anglais, ci-après ALD) puisque le liant risque de se décomposer et de polluer le réacteur ALD lors du dépôt. Par ailleurs, la présence de liant peut empêcher le revêtement réalisé par ALD d'être conformal et de jouer son rôle, i.e. de bloquer les réactions parasites pouvant survenir entre les électrodes et l'électrolyte. Or, la réalisation de ces dépôts par ALD favorise la longévité de ces électrodes, et *a fortiori* la tenue dans le temps des batteries les contenant. La présence de liant organique au sein d'une batterie empêche son encapsulation de manière optimale.

Par ailleurs, ces cellules électrochimiques telles que des batteries à ions de lithium emploient typiquement des électrolytes comprenant plus de 50% massique de solvant, ce qui représente un risque de sécurité en cas de dysfonctionnement ; ces batteries peuvent s'enflammer.

La présente invention cherche à remédier au moins en partie aux inconvénients de l'art antérieur évoqués ci-dessus.

Plus précisément, le problème que la présente invention cherche à résoudre est de fournir un procédé de fabrication des électrodes poreuses ayant une densité de pores contrôlée qui soit simple, sûr, rapide, facile à mettre en oeuvre, peu coûteux et pouvant s'affranchir de l'emploi de liants organiques et/ou de matériaux conducteurs électroniques tels que le graphite.

La présente invention vise également à proposer des électrodes poreuses sûres ayant une conductivité ionique élevée, une structure mécanique stable, une bonne stabilité thermique et une durée de vie importante.

Un autre but de l'invention est de proposer des électrodes pour des batteries capables de fonctionner à température élevée sans problème de fiabilité et sans risque d'incendie.

Un autre but de l'invention est de proposer des électrodes poreuses qui présentent, en plus des caractéristiques précédentes, une faible résistance interfaciale.

Un autre but de l'invention est de proposer des électrodes poreuses qui, en plus des caractéristiques précédentes, peuvent facilement être mouillées et imprégnées par un liquide ionique.

Un autre but de l'invention est de proposer des électrodes poreuses imprégnées d'un électrolyte dont les réactions parasites sont minimisées.

Un autre but de l'invention est de fournir un procédé de fabrication d'un dispositif électronique, électrique ou électrotechnique tel qu'une batterie, un condensateur, un supercondensateur, une cellule photovoltaïque comprenant une électrode poreuse selon l'invention.

Encore un autre but de l'invention est de proposer des dispositifs tels que des batteries, des cellules de batteries à ions de lithium, des condensateurs, des supercondensateurs, des cellules photovoltaïques capables de stocker de fortes densités d'énergie, de restituer cette énergie avec de très fortes densités de puissance (notamment dans les condensateurs ou supercondensateurs), de résister à des températures élevées, d'avoir une durée de vie élevée et pouvant être encapsulés par des revêtements déposés par ALD sous haute température.

**Objets de l'invention**

Selon l'invention le problème est résolu par l'utilisation d'au moins une électrode qui présente une structure poreuse présentant une porosité supérieure à 30 % en volume. De manière très préférée, cette porosité est une mésoporosité. Cette électrode peut être déposée par électrophorèse à partir d'une suspension colloïdale de nanoparticules de matériau d'électrode. De préférence elle ne contient pas de liant. Selon une caractéristique essentielle de l'invention cette suspension comporte des agrégats ou des agglomérats de nanoparticules.

Un premier objet de l'invention est un procédé de fabrication d'une électrode poreuse, de préférence en couche mince, ladite électrode comprenant une couche déposée sur un substrat, ladite couche étant exempte de liant et présentant une porosité supérieure à 30% en volume, et des pores de diamètre moyen inférieur à 50 nm, ledit procédé étant caractérisé en ce que :

(a) on approvisionne une suspension colloïdale comprenant des agrégats ou des agglomérats de nanoparticules d'au moins un matériau P de diamètre primaire moyen $D_{50}$ inférieur ou égal à 80 nm, et de préférence inférieur ou égal à 50 nm, lesdits agrégats ou agglomérats présentant un diamètre moyen compris entre 80 nm et 300 nm (de préférence entre 100 nm et 200 nm),

(b) on approvisionne un substrat,

(c) on dépose sur ledit substrat une couche d'électrode poreuse, de préférence mésoporeuse, par électrophorèse, par le procédé d'impression par jet d'encre ci-après « ink-jet », par raclage ci-après « doctor blade », par enduction au rouleau (appelé « roll coating » en anglais), par enduction au rideau (appelé « curtain coating » en anglais) ou par le procédé d'enduction par trempage (appelé « dip-coating » en anglais), à partir de ladite suspension colloïdale approvisionnée à l'étape (a),

(d) on sèche ladite couche obtenue à l'étape c), de préférence sous un flux d'air.

L'ordre des étapes (a) et (b) n'a pas d'importance.

On peut ajouter après l'étape (d) une étape e) où l'on consolide la couche d'électrode poreuse, de préférence mésoporeuse, obtenue à l'étape d) par pressage et/ou traitement thermique (i.e. chauffage). On peut ajouter après l'étape (d) une étape de traitement thermique, possiblement précédée d'une étape de pression, afin d'améliorer la performance des électrodes obtenues. En fonction des matériaux utilisés, ce traitement thermique (i.e. chauffage) peut améliorer la texturation de la couche, améliorer l'état cristallin de la couche, améliorer le frittage des nanoparticules, ou encore améliorer l'adhésion de la couche au substrat. Le traitement thermique réalisé sur une couche d'électrode poreuse obtenue à partir d'une suspension colloïdale de nanoparticules agrégées, favorise l'agglomération des nanoparticules, i.e. la création de liaisons fortes entre ces nanoparticules. On peut également effectuer le traitement thermique en même temps que l'on applique la pression.

Avantageusement, le dépôt électrophorétique est effectué à l'étape c) par électrodéposition galvanostatique stationnaire ou par électrodéposition galvanostatique en mode pulsé.

Avantageusement la porosité totale des électrodes poreuses n'excède pas 50 % en volume. Avantageusement, le diamètre moyen des pores est compris entre 2 nm et 80 nm, de préférence compris entre 2 nm et 50 nm, préférentiellement compris entre 6 nm et 30 nm et encore plus préférentiellement entre 8 nm et 20 nm.

Dans un mode de réalisation de ce procédé :

(a1) on approvisionne une suspension colloïdale comportant des nanoparticules, de préférence monodisperses, d'au moins un matériau P de diamètre primaire moyen $D_{50}$ inférieur ou égal à 80 nm, et de préférence inférieur ou égal à 50 nm ;

(a2) on déstabilise les nanoparticules, de préférence monodisperses, présentes dans la dite suspension colloïdale de manière à former des agrégats ou des agglomérats de particules de diamètre moyen compris entre 80 nm et 300 nm, de préférence entre 100 nm et 200 nm, ladite déstabilisation se faisant de préférence par ajout d'un agent déstabilisant tel qu'un sel, de préférence du LiOH ;

(b) on approvisionne un substrat ;

(c) on dépose sur ledit substrat une couche d'électrode poreuse par électrophorèse, par le procédé d'impression par jet d'encre, par raclage, par enduction au rouleau, par enduction au rideau ou par dip-coating, à partir de ladite suspension colloïdale comprenant les agrégats ou les agglomérats de nanoparticules obtenus à l'étape (a2) ;

(d) on sèche ladite couche, de préférence sous un flux d'air,

et on peut ajouter une étape (e) après l'étape (d) de consolidation de la couche d'électrode poreuse obtenue à l'étape (d) telle qu'une étape de pressage et/ou de traitement thermique (i.e chauffage), de préférence une étape de traitement thermique, possiblement précédée d'une étape de pression, afin d'améliorer la performance des électrodes obtenues. On peut également effectuer le traitement thermique en même temps que l'on applique la pression.

L'ordre des étapes (a1) et (b) n'a pas d'importance.

Avantageusement, le dépôt, de préférence le dépôt électrophorétique obtenu à l'étape (c) a une épaisseur inférieure à 10 $\mu$m, de préférence inférieure à 8 $\mu$m, et encore plus préférentiellement comprise entre 1 $\mu$m et 6 $\mu$m.

Lesdites nanoparticules primaires formant les agrégats ou les agglomérats sont de préférence monodisperses, c'est-à-dire leur diamètre primaire présente une distribution étroite. Cela permet un meilleur contrôle de la porosité. Avantageusement, le diamètre desdites nanoparticules est compris entre 10 nm et 50 nm, de préférence entre 10 nm et 30 nm.

Le traitement thermique conduit à la coalescence partielle des nanoparticules de matériau P (phénomène appelé en anglais « necking ») favorisant la conduction des électrons entre les nanoparticules, sachant que les nanoparticules présentent une haute énergie de surface qui est la force motrice pour cette modification structurale ; cette dernière se produit à une température très inférieure au point de fusion du matériau, et après un temps de traitement assez court. Ainsi se crée une structure poreuse tridimensionnelle au sein de laquelle les ions de lithium présentent une mobilité qui n'est pas ralentie par des joints de grain ou des couches de liant. Cette coalescence partielle des nanoparticules agrégées permet la transformation des agrégats en agglomérats. La coalescence partielle des nanoparticules agglomérées induite par le traitement thermique permet la consolidation de la structure mésoporeuse tridimensionnelle.

Par ailleurs, la conduction ionique peut aussi être assurée par l'électrolyte imprégné dans l'électrode selon l'invention. Cette structure présente également une bonne tenue mécanique de la couche.

Les agrégats, respectivement les agglomérats, peuvent également être obtenus directement après synthèse hydrothermale si la suspension n'est pas suffisamment purifiée : la force ionique de la suspension conduit alors à l'agrégation, respectivement à l'agglomération des nanoparticules primaires pour former des particules agrégées, respectivement agglomérées de taille plus grande.

Dans un mode de réalisation particulier on dépose après l'étape (d) ou après l'étape (e), de préférence par la technique de dépôt de couches atomiques ALD, lors d'une étape (f) une couche d'un matériau isolant électriquement sur et à l'intérieur des pores de la couche poreuse, de préférence mésoporeuse. Ce matériau isolant électriquement peut être choisi parmi l'$Al_2O_3$, $SiO_2$, $ZrO_2$. Ce revêtement enrobant présente typiquement une épaisseur comprise entre 1 nm et 5 nm. Il permet de réduire les réactions faradiques interfaciales existant entre la couche d'électrode poreuse et l'électrolyte. Ces couches peuvent également être déposées par voie chimique en solution, connue sous le sigle CSD (de l'anglais « Chemical Solution Déposition »).

Alternativement on dépose après l'étape (d) ou après l'étape (e), de préférence par ALD ou par CSD, lors d'une étape (f) une couche d'un matériau conducteur ionique choisi parmi le $Li_3PO_4$, le $Li_3BO_3$, le lithium lanthane zirconium oxyde, de préférence le $Li_7La_3Zr_2O_{12}$, sur et à l'intérieur des pores de la couche poreuse, de préférence mésoporeuse. Ce revêtement enrobant présente typiquement une épaisseur comprise entre 1 nm et 5 nm.

Un autre objet de l'invention concerne une électrode poreuse, de préférence mésoporeuse utilisable dans une batterie aux ions de lithium. Un autre objet de l'invention concerne une électrode poreuse, de préférence mésoporeuse, de porosité supérieure à 30% en volume comprenant des pores de diamètre moyen inférieur à 80 nm, de préférence inférieur à 50 nm, un diamètre primaire de particules inférieur à 30 nm, comprenant, de préférence, une épaisseur inférieure à 100 $\mu$m, de préférence inférieure à 50 $\mu$m et encore plus préférentiellement inférieure à 10 $\mu$m, caractérisée en ce qu'elle est exempte de liant. Avantageusement, lesdits pores de l'électrode poreuse, de préférence mésoporeuse, sont imprégnés par un électrolyte, de préférence une phase porteuse d'ions de lithium telle qu'un liquide ionique contenant des sels de lithium, possiblement dilué avec un solvant organique ou un mélange de solvants organiques contenant un sel de lithium pouvant être différent de celui dissous dans le liquide ionique ou telle qu'un solvant dilué dans au moins un liquide ionique, de préférence représentant plus de 50% massique de la totalité de la phase porteuse d'ions de lithium.

Avantageusement, lesdits pores de l'électrode poreuse, de préférence mésoporeuse, sont imprégnés par une phase porteuse d'ions de lithium comprenant au moins 50% massique d'au moins un liquide ionique.

Un autre objet de l'invention concerne un procédé de fabrication d'une batterie, mettant en oeuvre le procédé de fabrication d'une électrode poreuse selon l'invention.

Un autre objet de l'invention concerne une batterie comprenant au moins une électrode poreuse susceptible d'être obtenue par le procédé selon l'invention. Un autre objet de l'invention concerne une batterie dont toutes ses électrodes sont des électrodes poreuses susceptibles d'être obtenues par le procédé selon l'invention.

**Brève description des figures**

Les figures 1 et 2 illustrent différents aspects de modes de réalisation de l'invention, sans pour autant limiter sa portée.

La figure 1(a) montre un diffractogramme, la figure 1(b) un cliché obtenu par microscopie électronique à transmission de nanoparticules primaires utilisées pour le dépôt des électrodes selon l'invention par électrophorèse.

La figure 2 illustre des nanoparticules avant (figure 2(a)) et après traitement thermique (figure 2(b)), illustrant le phénomène du « necking ».

La figure 3 représente de manière schématique, une vue de face avec arrachement d'une batterie comprenant une électrode selon l'invention et faisant apparaitre la structure de la batterie comprenant un assemblage de cellules élémentaires recouvert par un système d'encapsulation et des terminaisons.

La figure 4 est une vue de face avec arrachement d'une batterie, illustrant à plus grande échelle le détail IV d'une électrode poreuse disposée sur un substrat servant de collecteur de courant.

Liste des repères utilisés sur les figures :

[Table 1]

| 1 | Batterie | 22 | Couche d'un matériau actif de cathode poreuse |
|---|---|---|---|
| 2 | Cellule élémentaire | 23 | Couche d'un matériau d'électrolyte / couche poreuse jouant le rôle d'un séparateur imprégnée d'une phase porteuse d'ions de lithium |
| 11 | Couche d'un substrat servant de collecteur de courant | 30 | Système d'encapsulation |
| 12 | Couche d'un matériau actif d'anode poreuse | 40 | Terminaison |
| 13 | Couche d'un matériau d'électrolyte / couche poreuse jouant le rôle d'un séparateur imprégnée d'une phase porteuse d'ions de lithium | 50 | Connexions anodiques et/ou cathodiques |
| 21 | Couche d'un substrat servant de collecteur de courant | 51 | Surface de contact |
| 60 | Zone de soudure entre la couche poreuse et le substrat | 62 | couche diélectrique déposée sur la surface accessible des électrodes |
| 61 | pore | 63 | couche diélectrique déposée sur la surface accessible du substrat |

## Description détaillée

1. Définitions

Dans le cadre du présent document, la taille d'une particule est définie par sa plus grande dimension. Par « nanoparticule », on entend toute particule ou objet de taille nanométrique présentant au moins une de ses dimensions inférieure ou égale à 100 nm.

Par « liquide ionique » on entend tout sel liquide, apte à transporter de l'électricité, se différenciant de l'ensemble des sels fondus par une température de fusion inférieure à 100°C. Certains de ces sels restent liquides à température ambiante et ne se solidifient pas, même à très basse température. De tels sels sont appelés « liquides ioniques à température ambiante ».

Par matériaux « mésoporeux », on entend tout solide qui présente au sein de sa structure des pores dites « mésopores » possédant une taille intermédiaire entre celle des micropores (largeur inférieure à 2 nm) et celle des macropores (largeur supérieure à 50 nm), à savoir une taille comprise entre 2 nm et 50 nm. Cette terminologie correspond à celle adoptée par IUPAC (International Union for Pure and Applied Chemistry), qui fait référence pour l'homme du métier. On n'utilise donc ici pas le terme « nanopore », même si les mésopores telles que définies ci-dessus présentent des dimensions nanométriques au sens de la définition des nanoparticules, sachant les pores de taille inférieure à celle des mésopores sont appelées par l'homme du métier des « micropores ».

Une présentation des concepts de porosité (et de la terminologie qui vient d'être exposée ci-dessus) est donnée dans l'article « *Texture des matériaux pulvérulents ou poreux* » par F. Rouquerol et al. paru dans la collection « *Techniques de l'Ingénieur* », traité Analyse et Caractérisation, fascicule P 1050 ; cet article décrit également les techniques de caractérisation de la porosité, notamment la méthode BET.

Au sens de la présente invention, on entend par « électrode mésoporeuse » ou « couche mésoporeuse » une électrode, respectivement une couche qui présente des mésopores. Comme cela sera expliqué ci-dessous, dans ces électrodes ou couches les mésopores contribuent de manière significative au volume poreux total ; cet état de fait est traduit par l'expression « électrode ou couche mésoporeuse de porosité mésoporeuse supérieure à X % en volume » utilisée dans la description ci-dessous.

Le terme « agrégat » signifie, selon les définitions de l'IUPAC un assemblage faiblement lié de particules primaires. En l'occurrence, ces particules primaires sont des nanoparticules présentant un diamètre qui peut être déterminé par microscopie électronique à transmission. Un agrégat de nanoparticules primaires agrégées peut normalement être détruit (i.e. réduit à des nanoparticules primaires) en suspension dans une phase liquide sous l'effet d'ultrasons, selon une technique connue de l'homme du métier.

Le terme « agglomérat » signifie, selon les définitions de l'IUPAC un assemblage fortement lié de particules primaires ou d'agrégats.

Selon l'invention, la couche d'électrode poreuse, de préférence mésoporeuse peut être déposée par voie électrophorétique, par le procédé d'enduction par trempage ci-après « dip-coating », par le procédé d'impression par jet d'encre ci-après « ink-jet » ou par raclage ci-après « doctor blade », par enduction au rouleau, par enduction au rideau et ce à partir d'une suspension d'agrégat ou d'agglomérats de nanoparticules, de préférence à partir d'une suspension concentrée contenant des agglomérats de nanoparticules.

2. Préparation des suspensions de nanoparticules

Dans le cadre de la présente invention il est préférable de ne pas préparer ces suspensions de nanoparticules à partir de nanopoudres sèches. On peut les préparer par broyage de poudres ou nanopoudres en phase liquide. Dans un autre mode de réalisation de l'invention les nanoparticules sont préparées en suspension directement par précipitation. La synthèse de nanoparticules par précipitation permet d'obtenir des nanoparticules primaires de taille très homogène avec une distribution de taille unimodale i.e. très reserrée et monodisperse, de bonne cristallinité et pureté. L'utilisation de ces nanoparticules de taille très homogène et de distribution étroite permet d'obtenir après dépôt une structure poreuse de porosité contrôlée et ouverte. La structure poreuse obtenue après dépôt de ces nanoparticules présente peu, de préférence ne présente pas de pores fermés.

Dans un mode de réalisation encore plus préféré de l'invention les nanoparticules sont préparées directement à leur taille primaire par synthèse hydrothermale ou solvothermale ; cette technique permet d'obtenir des nanoparticules avec une distribution de taille très étroite, appelées « nanoparticules monodisperses ». La taille de ces nanopoudres / nanoparticules non agrégées ou non agglomérées est appelée la taille primaire. Elle est avantageusement comprise entre 10 nm et 50 nm, de préférence entre 10 nm et 30 nm ; cela favorise lors des étapes de procédé ultérieures la formation d'un réseau mésoporeux interconnecté à conduction électronique et ionique, grâce au phénomène de « necking ».

Cette suspension de nanoparticules monodisperses peut être réalisée en présence de ligands ou de stabilisants organiques de manière à éviter l'agrégation, voire l'agglomération des nanoparticules.

Cette suspension de nanoparticules monodisperses peut être purifiée pour enlever tous les ions potentiellement gênants. En fonction du degré de purification elle peut ensuite être traitée spécialement pour former des agrégats ou des agglomérats d'une dimension contrôlée. Plus précisément, la formation d'agrégats ou d'agglomérats peut résulter de la déstabilisation de la suspension provoquée notamment par des ions, par l'accroissement de l'extrait sec de la suspension, par changement du solvant de la suspension, par l'ajout d'agent de déstabilisation. Si la suspension a été totalement purifiée elle est stable, et on ajoute des ions pour la déstabiliser, typiquement sous la forme d'un sel ; ces ions sont de préférence des ions de lithium (ajoutés de préférence sous la forme de LiOH).

Si la suspension n'a pas été totalement purifiée la formation des agrégats ou des agglomérats peut se faire toute seule de manière spontanée ou par vieillissement. Cette manière de procéder est plus simple car elle implique moins d'étapes de purification, mais il est plus difficile de contrôler la taille des agrégats ou des agglomérats. Un des aspects essentiels pour la fabrication d'électrodes selon l'invention consiste à bien maîtriser la taille des particules primaires de matériaux d'électrode et leur degré d'agrégation ou d'agglomération.

Si la stabilisation de la suspension de nanoparticules intervient après la formation d'agglomérats, ces derniers resteront sous forme d'agglomérats ; la suspension obtenue pourra être utilisée pour faire des dépôts mésoporeux.

C'est cette suspension d'agrégats ou d'agglomérats de nanoparticules qui est ensuite utilisée pour déposer par électrophorèse, par le procédé d'impression par jet d'encre ci-après « ink-jet », par raclage ci-après « doctor blade », par enduction au rouleau, par enduction au rideau ou par dip-coating les couches d'électrode poreuses, de préférence mésoporeuses, selon l'invention.

Selon les constatations de la demanderesse, avec un diamètre moyen des agrégats ou des agglomérats de nanoparticules compris entre 80 nm et 300 nm (de préférence entre 100 nm à 200 nm) on obtient, lors des étapes de procédé ultérieures, une couche mésoporeuse présentant un diamètre moyen des mésopores compris entre 2 nm et 50 nm.

Selon l'invention, la couche d'électrode poreuse peut être déposée par voie électrophorétique, par le procédé d'enduction par trempage ci-après « dip-coating », par le procédé d'impression par jet d'encre ci-après « ink-jet », par enduction au rouleau, par enduction au rideau ou par raclage ci-après « doctor blade », par enduction au rouleau, par enduction au rideau et ce à partir d'une solution comprenant des agrégats ou des agglomérats de nanoparticules, de préférence à partir d'une solution concentrée contenant des agglomérats de nanoparticules. La couche d'électrode poreuse est avantageusement déposée par le procédé d'enduction par trempage ci-après « dip-coating » à partir d'une solution concentrée contenant des agglomérats de nanoparticules.

Les procédés de dépôt d'agrégats ou d'agglomérats de nanoparticules par voie électrophorétique, par le procédé d'enduction par trempage (appelé « dip-coating » en anglais), par le procédé d'impression par jet d'encre (appelé « ink-jet » en anglais), par enduction au rouleau (appelé « roll coating » en anglais), par enduction au rideau (appelé « curtain coating » en anglais) ou par raclage (appelé « doctor blade » en anglais) sont des procédés simples, sûrs, facile à mettre en oeuvre, à industrialiser et permettant d'obtenir une couche poreuse finale homogène. Le dépôt par voie électrophorétique est une technique qui permet de déposer de manière uniforme sur de larges surfaces avec des vitesses de dépôt élevées. Les techniques d'enduction, notamment par trempage, au rouleau, au rideau ou par raclage, permettent de simplifier la gestion des bains par rapport aux techniques de dépôt par voie électrophorétique. Le dépôt par impression par jet d'encre permet de faire des dépôts localisés.

Des électrodes poreuses en couche épaisse et réalisées en une seule étape peuvent être obtenues par enduction au rouleau, par enduction au rideau ou par raclage.

3. <u>Nature du collecteur de courant</u>

Le substrat servant de collecteur de courant au sein des batteries employant des électrodes poreuses selon l'invention peut être métallique, par exemple une feuille métallique, ou une feuille polymérique ou non métallique métallisée (i.e. revêtue d'une couche de métal). Le substrat est de préférence choisi parmi des feuillards en titane, en cuivre, en nickel ou en acier inoxydable.

La feuille métallique peut être revêtue d'une couche de métal noble, notamment choisi parmi l'or, le platine, le palladium, le titane ou des alliages contenant majoritairement au moins un ou plusieurs de ces métaux, ou d'une couche de matériau conducteur de type ITO (qui a l'avantage d'agir également comme barrière de diffusion).

Dans les batteries employant des électrodes poreuses selon l'invention, les électrolytes liquides qui viennent imprégner l'électrode poreuse sont en contact direct avec le collecteur de courant. Cependant, lorsque ces électrolytes sont en contact avec les substrats métalliques et polarisés à des potentiels très anodiques pour la cathode et très cathodique pour l'anode, ces électrolytes sont susceptibles d'induire une dissolution du collecteur de courant. Ces réactions parasites peuvent dégrader la durée de vie de la batterie et accélérer son autodécharge. Pour éviter cela, des collecteurs de courant en aluminium sont utilisés à la cathode, dans toutes les batteries à ions de lithium. L'aluminium a cette particularité de s'anodiser aux potentiels très anodiques, et la couche d'oxyde ainsi formée à sa surface le protège de la dissolution. Cependant l'aluminium présente une température de fusion proche de 600°C et ne peut être utilisé pour la fabrication de batteries selon l'invention. Les traitements de consolidation des électrodes entièrement solides conduiraient à faire fondre le collecteur de courant. Ainsi, pour éviter les réactions parasites pouvant dégrader la durée de vie de la batterie et accélérer son autodécharge, un feuillard de titane est avantageusement utilisé comme collecteur de courant à la cathode. Lors du fonctionnement de la batterie, le feuillard en titane va, comme l'aluminium, s'anodiser et sa couche d'oxyde va empêcher les éventuelles réactions parasites de dissolution du titane au contact de l'électrolyte liquide. De plus, comme le titane présente un point de fusion beaucoup plus élevé que l'aluminium, des électrodes entièrement solides selon l'invention, peuvent être réalisées directement sur ce type de feuillard.

L'emploi de ces matériaux massifs, notamment de feuillards en titane, en cuivre ou en nickel, permet également de protéger les bords de découpe des électrodes de batteries des phénomènes de corrosion.

L'acier inoxydable peut également être employé comme collecteur de courant, notamment lorsqu'il contient du titane ou de l'aluminium comme élément d'alliage, ou lorsqu'il présente en surface une fine couche d'oxyde protecteur.

D'autres substrats servant de collecteur de courant peuvent être utilisés tels que des feuillards métalliques moins nobles recouverts d'un revêtement protecteur, permettant d'éviter l'éventuelle dissolution de ces feuillards induite par la présence d'électrolytes à leur contact.

Ces feuillards métalliques moins nobles peuvent être des feuillards en Cuivre, en Nickel ou des feuillards d'alliages métalliques tels que des feuillards en acier inoxydable, des feuillards d'alliage Fe-Ni, d'alliage Be-Ni-Cr, d'alliage Ni-Cr ou d'alliage Ni-Ti.

Le revêtement pouvant être utilisé pour protéger les substrats servant de collecteurs de courant peut être de différentes natures. Il peut être une :

- couche mince obtenue par procédé sol-gel du même matériau que celui de l'électrode. L'absence de porosité dans ce film permet d'éviter les contacts entre l'électrolyte et le collecteur de courant métallique.
- couche mince obtenue par dépôt sous vide, notamment par dépôt physique en phase vapeur (ou PVD pour l'anglais physical vapor déposition) ou par dépôt chimique en phase vapeur (ou CVD pour l'anglais chemical vapor déposition), du même matériau que celui de l'électrode,
- couche mince métallique, dense, sans défaut, telle qu'une couche mince métallique d'or, de titane, de platine, de palladium, de tungstène ou de molybdène. Ces métaux peuvent être utilisés pour protéger les collecteurs de courant car ils ont de bonnes propriétés de conduction et peuvent résister aux traitements thermiques lors du procédé subséquent de fabrication des électrodes. Cette couche peut notamment être réalisée par électrochimie, PVD, CVD, évaporation, ALD.

- couche mince de carbone tel que du carbone diamant, graphique, déposé par ALD, PVD, CVD ou par encrage d'une solution sol-gel permettant d'obtenir après traitement thermique une phase inorganique dopée en carbone pour la rendre conductrice.
  - couche d'oxydes conducteurs, telle qu'une couche d'ITO (oxyde d'indium-étain) uniquement déposée sur le substrat cathodique car les oxydes se réduisent aux faibles potentiels.
  - couche de nitrures conducteurs telle qu'une couche de TiN uniquement déposée sur le substrat cathodique car les nitrures insèrent le lithium aux faibles potentiels.

Le revêtement pouvant être utilisé pour protéger les substrats servant de collecteurs de courant doit être conducteur électronique pour ne pas nuire au fonctionnement de l'électrode déposée ultérieurement sur ce revêtement, en la rendant trop résistive.

D'une manière générale, pour ne pas impacter trop lourdement le fonctionnement des cellules batteries, les courants de dissolution max mesurés sur les substrats, aux potentiels de fonctionnement des électrodes, exprimés en $\mu A/cm^2$, doivent être 1000 fois inférieurs aux capacités surfaciques des électrodes exprimées en $\mu Ah/cm^2$.

## 4. Dépôt des couches par électrophorèse

Le procédé selon l'invention utilise avantageusement l'électrophorèse de suspensions de nanoparticules comme technique de dépôt des couches d'électrode poreuse, de préférence mésoporeuse. Le procédé de dépôt de couches d'électrodes à partir d'une suspension de nanoparticules est connu en tant que tel (voir par exemple EP 2 774 194 B1). Le substrat peut être métallique, par exemple une feuille métallique, ou une feuille polymérique ou non métallique métallisée (i.e. revêtue d'une couche de métal). Le substrat servant de collecteur de courant au sein des batteries employant des électrodes poreuses selon l'invention est de préférence choisi parmi des feuillards en titane, en cuivre, en acier inoxydable ou en nickel.

On peut par exemple utiliser une feuille d'acier inoxydable d'une épaisseur de 5 $\mu$m. La feuille métallique peut être revêtue d'une couche de métal noble, notamment choisi parmi l'or, le platine, le palladium, le titane ou des alliages contenant majoritairement au moins un ou plusieurs de ces métaux, ou d'une couche de matériau conducteur de type ITO (qui a l'avantage d'agir également comme barrière de diffusion).

Dans un mode de réalisation particulier on dépose sur la couche de métal une couche, de préférence une couche mince, d'un matériau d'électrode ; ce dépôt doit être très mince (typiquement quelques dizaines de nanomètres, et plus généralement compris entre 10 nm et 100 nm). Il peut être réalisé par un procédé sol-gel. On peut utiliser par exemple du $LiMnO_4$ pour une cathode poreuse de $LiMn_2O_4$.

Pour que l'électrophorèse puisse avoir lieu, on pose une contre-électrode dans la suspension et on applique une tension entre le substrat conducteur et ladite contre-électrode.

Dans un mode de réalisation avantageux, le dépôt électrophorétique des agrégats ou des agglomérats de nanoparticules est effectué par électrodéposition galvanostatique en mode pulsé ; on applique des impulsions de courant à haute fréquence, cela évite la formation de bulles à la surface des électrodes et les variations du champ électrique dans la suspension pendant le dépôt. L'épaisseur de la couche d'électrode ainsi déposée par électrophorèse, de préférence par électrodéposition galvanostatique en mode pulsé est avantageusement inférieure à 10 $\mu$m, de préférence inférieure à 8 $\mu$m, et se situe encore plus préférentiellement entre 1 $\mu$m et 6 $\mu$m.

## 5. Dépôt d'une couche d'électrode poreuse par dip-coating

On peut déposer des agrégats ou des agglomérats de nanoparticules par le procédé d'enduction par trempage (appelé « dip-coating » en anglais), et ce, quel que soit la nature chimique des nanoparticules employées. Ce procédé de dépôt est préféré lorsque les nanoparticules employées sont peu ou pas chargées électriquement. Afin d'obtenir une couche d'une épaisseur désirée, l'étape de dépôt par dip-coating des agrégats ou des agglomérats de nanoparticules suivie de l'étape de séchage de la couche obtenue sont répétées autant que nécessaire.

Bien que cette succession d'étapes d'enduction par trempage / séchage soit chronophage, le procédé de dépôt par dip-coating est un procédé simple, sûr, facile à mettre en oeuvre, à industrialiser et permettant d'obtenir une couche finale homogène et compacte.

## 6. Traitement et propriétés des couches déposées

Les couches déposées doivent être séchées ; le séchage ne doit pas induire la formation de fissures. Pour cette raison il est préféré de l'effectuer dans des conditions d'humidité et de température contrôlées.

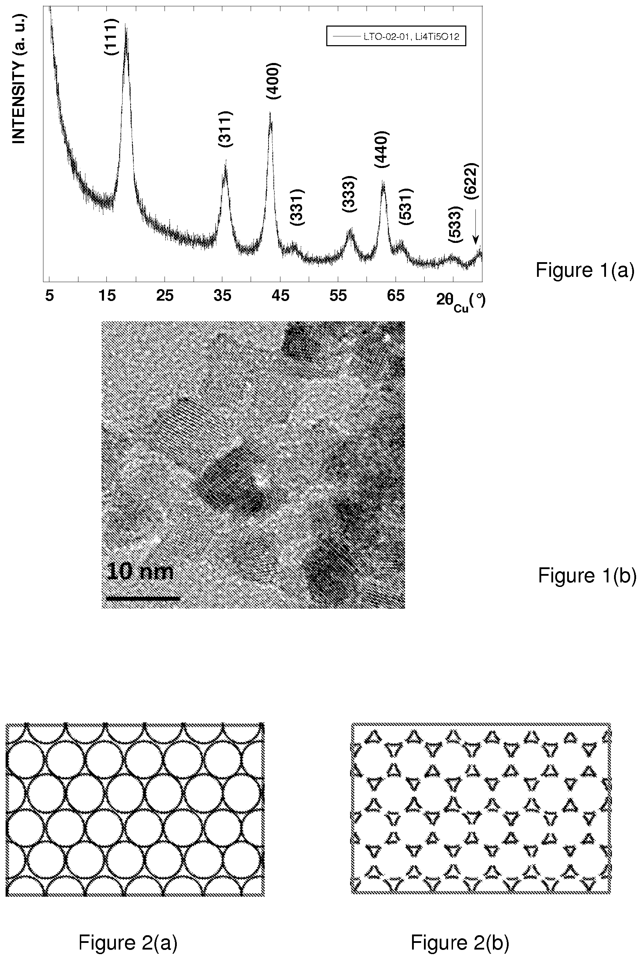

Les couches séchées peuvent être consolidées par une étape de pressage et/ou de chauffage (traitement thermique). Dans un mode de réalisation très avantageux de l'invention ce traitement conduit à une coalescence partielle des nanoparticules primaires dans les agrégats, ou les agglomérats, et entre agrégats ou agglomérats voisins ; ce phénomène est appelé « necking » ou « neck formation ». Il est caractérisé par la coalescence partielle de deux particules en contact, qui restent séparées mais reliées par un col (retreint) ; cela est illustré de manière schématique sur la figure 2. Les ions de lithium et les électrons sont mobiles au sein de ces cols et peuvent diffuser d'une particule à l'autre sans rencontrer des joints de grains. Les nanoparticules sont soudées entre elles pour assurer la conduction des électrons d'une particule à l'autre. Ainsi se forme un réseau tridimensionnel de particules interconnectées à forte mobilité ionique et conduction électronique ; ce réseau comporte des pores, de préférence des mésopores.

La température nécessaire pour obtenir du « necking » dépend du matériau ; compte tenu du caractère diffusif du phénomène qui conduit au necking, la durée du traitement dépend de la température.

Le traitement thermique peut également servir à éliminer les additifs organiques éventuellement contenus dans la suspension de nanoparticules employée tels que des ligands /ou stabilisants organiques résiduels. Lorsque la suspension de nanoparticules employée comprend uniquement des nanoparticules et un solvant, i.e lorsqu'elle est exempte de ligands /ou stabilisants organiques résiduels, le traitement thermique permettant la consolidation n'est pas nécessaire.

Avantageusement, la couche d'électrode séchée, et de préférence consolidée, ne contient pas de liant mais peut contenir jusqu'à 10% massique de carbone, notamment sous forme de graphène, de noir de carbone ou de nanotubes de carbone.

Les inventeurs ont constaté que du fait de la très grande surface spécifique des électrodes poreuses, de préférence mésoporeuses selon l'invention, lors de leur utilisation avec un électrolyte liquide des réactions parasites peuvent survenir entre les électrodes et l'électrolyte ; ces réactions sont au moins partiellement irréversibles. Dans un mode de réalisation avantageux on applique une couche diélectrique (i.e. un isolant électronique) très mince, couvrante et de préférence sans défauts, sur la couche d'électrode poreuse, de préférence mésoporeuse, afin de passiver la surface de l'électrode, limiter les cinétiques des réactions électrochimiques parasites voire bloquer ces réactions parasites. Cette couche diélectrique présente avantageusement une conductivité électronique inférieure à $10^{-8}$ S/cm. Avantageusement, cette couche diélectrique peut être une couche d'un matériau isolant électriquement déposée sur et à l'intérieur des pores de la couche d'électrode poreuse, de préférence par la technique de dépôt de couches atomiques ALD ou par voie chimique en solution CSD, lors d'une étape f) après l'étape d) de séchage de la couche d'électrode poreuse ou après l'étape e) de consolidation de la couche d'électrode poreuse. Avantageusement ce dépôt est réalisé au moins sur une face de l'électrode qui forme l'interface entre l'électrode et l'électrolyte. Cette couche peut par exemple être en alumine $Al_2O_3$, en silice $SiO_2$, ou en zircone $ZrO_2$. Sur la cathode on peut utiliser du $Li_4Ti_5O_{12}$ ou un autre matériau qui, comme le $Li_4Ti_5O_{12}$, présente la caractéristique de ne pas insérer, aux tensions de fonctionnement de la cathode, de lithium et de se comporter comme un isolant électronique.

Alternativement cette couche diélectrique peut être un conducteur ionique, qui présente avantageusement une conductivité électronique inférieure à $10^{-8}$ S/cm. Ce matériau doit être choisi de manière à ne pas insérer, aux tensions de fonctionnement de la batterie, du lithium mais uniquement à le transporter. Avantageusement, cette couche diélectrique peut être une couche d'un matériau conducteur ionique déposée sur et à l'intérieur des pores de la couche d'électrode poreuse, de préférence par la technique de dépôt de couches atomiques ALD ou par voir chimique en solution CSD, lors d'une étape f) après l'étape d) de séchage de la couche d'électrode poreuse ou après l'étape e) de consolidation de la couche d'électrode poreuse. On peut utiliser à ce titre par exemple le $Li_3PO_4$, le $Li_3BO_3$, le lithium lanthane zirconium oxyde (appelé « LLZO »), tel que le $Li_7La_3Zr_2O_{12}$, qui présentent une large gamme de potentiel de fonctionnement. En revanche, le lithium lanthane titane oxyde (abrégé « LLTO »), tel que le $Li_{3x}La_{2/3-x}TiO_3$, le lithium aluminum titanium phosphate (abrégé « LATP »), le lithium aluminium germanium phosphate (abrégé « LAGP »), peuvent être utilisés uniquement au contact des cathodes car leur plage de potentiel de fonctionnement est restreinte ; au-delà de cette plage ils sont susceptibles d'insérer le lithium dans leur structure cristallographique.

Ce dépôt améliore encore les performances des batteries à ions de lithium comportant au moins une électrode poreuse selon l'invention. L'amélioration constatée consiste essentiellement en une réduction des réactions faradiques d'interface avec les électrolytes. Ces réactions parasites sont d'autant plus importantes que la température est élevée ; elles sont à l'origine de pertes de capacités réversibles et/ou irréversibles.

De manière très avantageuse ce dépôt est réalisé par une technique permettant un revêtement enrobant (appelé aussi « dépôt conforme »), i.e. un dépôt qui reproduit fidèlement la topographie atomique du substrat sur lequel il est appliqué. La technique de ALD (Atomic Layer Deposition) ou de CSD (Chemical Solution Déposition), connue en tant que telle, peut convenir. Elle peut être mise en oeuvre sur les électrodes après fabrication, avant et/ou après le dépôt des particules de séparateur et avant et/ou après l'assemblage de la cellule. La technique de dépôt par ALD se fait couche par couche, par un procédé cyclique, et permet de réaliser un revêtement enrobant qui reproduit fidèlement la topographie du substrat ; il tapisse la totalité de la surface des électrodes. Ce revêtement enrobant présente typiquement une épaisseur comprise entre 1 nm et 5 nm. La technique de dépôt par CSD permet de réaliser un revêtement enrobant qui reproduit fidèlement la topographie du substrat ; il tapisse la totalité de la surface des électrodes. Ce revêtement enrobant présente typiquement une épaisseur inférieure à 5 nm, de préférence comprise entre 1 nm et 5 nm.

Dans cette variante de dépôt d'une nanocouche diélectrique, il est préférable que le diamètre primaire $D_{50}$ des

particules de matériau d'électrode soit d'au moins 10 nm afin d'éviter que la couche diélectrique ne bouche la porosité ouverte de la couche d'électrode.

La couche diélectrique ne doit être déposée que sur des électrodes poreuses ne contenant pas de liant organique. En effet le dépôt par ALD est réalisé à une température typiquement comprise entre 100 °C et 300 °C. A cette température les matériaux organiques formant le liant (par exemple les polymères contenus dans les électrodes réalisées par tape casting d'encre) risquent de se décomposer et vont polluer le réacteur ALD. Par ailleurs, la présence de polymères résiduels au contact des particules de matière active d'électrode peut empêcher le revêtement ALD d'enrober la totalité des surfaces de particules, ce qui nuit à son efficacité.

A titre d'exemple, une couche d'alumine d'une épaisseur de l'ordre de 1,6 nm peut convenir. D'une manière générale, le procédé selon l'invention, qui fait intervenir obligatoirement une étape de dépôt par électrophorèse de nanoparticules de matériau d'électrode (matière active), fait que les nanoparticules se « soudent » naturellement entre elles pour générer une structure poreuse, rigide, tridimensionnelle, sans liant organique ; cette couche poreuse, de préférence mésoporeuse, est parfaitement bien adaptée à l'application d'un traitement de surface par ALD qui rentre dans la profondeur de la structure poreuse ouverte de la couche.

Sur les électrodes poreuses, de préférence mésoporeuses, revêtues ou non d'une couche diélectrique par ALD ou par CSD, on peut déposer encore une couche poreuse, de préférence mésoporeuse de nanoparticules d'un matériau diélectrique qui servira de séparateur poreux. Ce matériau peut être notamment de la silice, de l'alumine, de la zircone. Cette couche poreuse, appliquée entre les électrodes sera imprégnée par capillarité par une phase porteuse d'ions de lithium telle que des électrolytes liquides afin de réaliser une cellule batteries.

On peut également déposer une couche d'un électrolyte solide qui est un conducteur d'ions de lithium et un isolant d'électrons, par exemple du $Li_3PO_4$ comme séparateur poreux. Dans un mode de réalisation on utilise une suspension colloïdale, monodisperse de nanoparticules de silice (disponible dans le commerce, par exemple de la société Alfa Aesar), avec une taille de particule de 20 nm, qui est diluée à 20 g/l. Cette suspension est ensuite déstabilisée par ajout de LiOH pour modifier sa charge ionique jusqu'à l'obtention d'agrégats ou d'agglomérats de tailles avoisinant les 100 nm. A partir de cette suspension colloïdale d'agrégats ou d'agglomérats de nanoparticules, on réalise par électrophorèse deux couches d'une épaisseur de 1,5 $\mu$m chacune, respectivement sur l'anode et la cathode. Ces couches sont ensuite séchées.

## 1. Aspects particuliers pour la préparation de cathodes

Si l'électrode selon l'invention est une cathode elle peut être réalisée à partir d'un matériau P de cathode choisi parmi :

- les oxydes $LiMn_2O_4$, $Li_{1+x}Mn_{2-x}O_4$ avec 0 < x < 0,15, $LiCoO_2$, $LiNiO_2$, $LiMn_{1,5}Ni_{0,5}O_4$, $LiMn_{1,5}Ni_{0,5-x}X_xO_4$ où X est sélectionné parmi Al, Fe, Cr, Co, Rh, Nd, autres terres rares tels que Sc, Y, Lu, La, Ce, Pr, Pm, Sm, Eu, Gd, Tb, Dy, Ho, Er, Tm, Yb, et où 0 < x < 0,1, $LiMn_{2-x}M_xO_4$ avec M = Er, Dy, Gd, Tb, Yb, Al, Y, Ni, Co, Ti, Sn, As, Mg ou un mélange de ces composés et où 0 < x < 0,4, $LiFeO_2$, $LiMn_{1/3}Ni_{1/3}Co_{1/3}O_2$, $LiNi_{0,8}Co_{0,15}Al_{0,05}O_2$, $LiAl_xMn_{2-x}O_4$ avec $0 \leq x < 0,15$, $LiNi_{1/x}Co_{1/y}Mn_{1/z}O_2$ avec x+y+z =10 ;
- les phosphates $LiFePO_4$, $LiMnPO_4$, $LiCoPO_4$, $LiNiPO_4$, $Li_3V_2(PO_4)_3$; les phosphates de formule $LiMM'PO_4$, avec M et M' (M $\neq$ M') sélectionnés parmi Fe, Mn, Ni, Co, V ;
- toutes les formes lithiées des chalcogénides suivants : $V_2O_5$, $V_3O_8$, $TiS_2$, les oxysulfures de titane ($TiO_yS_z$ avec z=2-y et 0,3$\leq$y$\leq$1), les oxysulfures de tungstène ($WO_yS_z$ avec 0.6<y<3 et 0.1<z<2), CuS, $CuS_2$, de préférence $Li_xV_2O_5$ avec 0 <x$\leq$2, $Li_xV_3O_8$ avec 0 < x $\leq$ 1,7, $Li_xTiS_2$ avec 0 < x $\leq$ 1, les oxysulfures de titane et de lithium $Li_xTiO_yS_z$ avec z=2-y, 0,3$\leq$y$\leq$1, $Li_xWO_yS_z$, $Li_xCuS$, $Li_xCuS_2$.

## 2. Aspects particuliers pour la préparation d'anodes

Si l'électrode selon l'invention est une anode elle peut être réalisée à partir d'un matériau P d'anode choisi parmi :

- les nanotubes de carbone, le graphène, le graphite ;
- le phosphate de fer lithié (de formule typique $LiFePO_4$);
- les oxynitrures mixtes de silicium et étain (de formule typique $Si_aSn_bO_yN_z$ avec a>0, b>0, a+b$\leq$2, 0<y$\leq$4, 0<z$\leq$3) (appelés aussi SiTON), et en particulier le $SiSn_{0,87}O_{1,2}N_{1,72}$; ainsi que les oxynitrures-carbures de formule typique $Si_aSn_bC_cO_yN_z$ avec a>0, b>0, a+b$\leq$2, 0<c<10, 0<y<24, 0<z<17;
- les nitrures de type $Si_xN_y$ (en particulier avec x=3 et y=4), $Sn_xN_y$ (en particulier avec x=3 et y=4), $Zn_xN_y$ (en particulier avec x=3 et y=2), $Li_{3-x}M_xN$ (avec 0$\leq$x$\leq$0,5 pour M=Co, 0$\leq$x$\leq$0,6 pour M=Ni, 0$\leq$x$\leq$0,3 pour M=Cu); $Si_{3-x}M_xN_4$ avec M=Co ou Fe et 0$\leq$x$\leq$3.
- les oxydes $SnO_2$, SnO, $Li_2SnO_3$, $SnSiO_3$, $Li_xSiO_y$ (x>=0 et 2>y>0), $Li_4Ti_5O_{12}$, $TiNb_2O_7$, $Co_3O_4$, $SnB_{0,6}P_{0,4}O_{2,9}$ et

$TiO_2$,

- les oxydes composites $TiNb_2O_7$ comprenant entre 0% et 10% massique de carbone, de préférence le carbone étant choisi parmi le graphène et les nanotubes de carbone.

3. <u>Fabrication de batteries utilisant les électrodes selon l'invention</u>

Des électrodes poreuses selon l'invention, peuvent être revêtues ou non d'une couche diélectrique notamment par ALD ou par CSD.

Ces électrodes revêtues ou non peuvent ensuite être recouvertes d'une couche poreuse jouant le rôle de séparateur de manière à ce qu'il existe, entre chaque électrode revêtue ou non d'une couche diélectrique par ALD ou par CSD, une couche poreuse. Dans un mode de réalisation, le matériau employé pour la fabrication de cette couche poreuse jouant le rôle de séparateur est choisi parmi les matériaux inorganiques à bas point de fusion, isolant électriques et stables au contact des électrodes pendant les étapes de pressage à chaud. Plus les matériaux seront réfractaires, plus il sera nécessaire de chauffer à des températures élevées risquant ainsi de modifier les interfaces avec les matériaux d'électrodes, notamment par interdiffusion, ce qui engendre des réactions parasites et crée des couches de déplétion dont les propriétés électrochimiques diffèrent de celles que l'on trouve dans le même matériau à une plus grande profondeur à partir de l'interface.

Le matériau employé pour la fabrication de couches poreuses jouant le rôle de séparateur est de préférence inorganique. Dans un mode de réalisation particulier, le matériau employé pour la fabrication de cette couche poreuse jouant le rôle de séparateur est un matériau isolant électriquement. Il peut, de préférence, être choisi parmi l'$Al_2O_3$, $SiO_2$, $ZrO_2$. Alternativement, le matériau employé pour la fabrication de cette couche poreuse jouant le rôle de séparateur peut être un matériau conducteur ionique tel qu'un électrolyte solide. Selon l'invention le matériau d'électrolyte solide employé pour la fabrication d'une couche poreuse jouant le rôle de séparateur peut être choisi notamment parmi :

○ les grenats de formule $Li_d A^1_x A^2_y(TO_4)_z$ où

- $A^1$ représente un cation de degré d'oxydation +II, de préférence Ca, Mg, Sr, Ba, Fe, Mn, Zn, Y, Gd ; et où
- $A^2$ représente un cation de degré d'oxydation +III, de préférence Al, Fe, Cr, Ga, Ti, La ; et où
- $(TO_4)$ représente un anion dans lequel T est un atome de degré d'oxydation +IV, situé au centre d'un tétraèdre formé par les atomes d'oxygène, et dans lequel $TO_4$ représente avantageusement l'anion silicate ou zirconate, sachant que tout ou partie des éléments T d'un degré d'oxydation +IV peuvent être remplacés par des atomes d'un degré d'oxydation +III ou +V, tels que Al, Fe, As, V, Nb, In, Ta ;
- sachant que : d est compris entre 2 et 10, préférentiellement entre 3 et 9, et encore plus préférentiellement entre 4 et 8 ; x est être compris entre 2,6 et 3,4 (de préférence entre 2,8 et 3,2) ; y est compris entre 1,7 et 2,3 (de préférence entre 1,9 et 2,1) et z est compris entre 2,9 et 3,1;

○ les grenats, de préférence choisi parmi : le $Li_7La_3Zr_2O_{12}$; le $Li_6La_2BaTa_2O_{12}$; le $Li_{5,5}La_3Nb_{1,75}In_{0,25}O_{12}$; le $Li_5La_3M_2O_{12}$ avec M = Nb ou Ta ou un mélange des deux composés ; le $Li_{7-x}Ba_xLa_{3-x}M_2O_{12}$ avec $0 \leq x \leq 1$ et M = Nb ou Ta ou un mélange des deux composés ; le $Li_{7-x}La_3Zr_{2-x}M_xO_{12}$ avec $0 \leq x \leq 2$ et M = Al, Ga ou Ta ou un mélange de deux ou trois de ces composés ;

○ les phosphates lithiés, de préférence choisi parmi : les phosphates lithiés de type NaSICON, le $Li_3PO_4$; le $LiPOs$; le $Li_3Al_{0,4}Sc_{1,6}(PO_4)_3$ appelés « LASP » ; le $Li_{1,2}Zr_{1,9}Ca_{0,1}(PO_4)_3$; le $LiZr_2(PO_4)_3$; le $Li_{1+3x}Zr_2(P_{1-x}Si_xO_4)_3$ avec $1,8 < x < 2,3$ ; le $Li_{1+6x}Zr_2(P_{1-x}B_xO_4)_3$ avec $0 \leq x \leq 0,25$ ; le $Li_3(Sc_{2-x}M_x)(PO_4)_3$ avec M=Al ou Y et $0 \leq x \leq 1$ ; le $Li_{1+x}M_x(Sc)_{2-x}(PO_4)_3$ avec M = Al, Y, Ga ou un mélange des trois composés et $0 \leq x \leq 0,8$ ; le $Li_{1+x}M_x(Ga_{1-y}Sc_y)_{2-x}(PO_4)_3$ avec $0 \leq x \leq 0,8$ ; $0 \leq y \leq 1$ et M= Al ou Y ou un mélange des deux composés; le $Li_{1+x}M_x(Ga)_{2-x}(PO_4)_3$ avec M = Al, Y ou un mélange des deux composés et $0 \leq x \leq 0,8$ ; le $Li_{1+x}Al_xTi_{2-x}(PO_4)_3$ avec $0 \leq x \leq 1$ appelés « LATP » ; ou le $Li_{1+x}Al_xGe_{2-x}(PO_4)_3$ avec $0 \leq x \leq 1$ appelés « LAGP » ; ou le $Li_{1+x+z}M_x(Ge_{1-y}Ti_y)_{2-x}Si_zP_{3-z}O_{12}$ avec $0 \leq x \leq 0,8$ et $0 \leq y \leq 1,0$ et $0 \leq z \leq 0,6$ et M= Al, Ga ou Y ou un mélange de deux ou trois de ces composés ; le $Li_{3+y}(Sc_{2-x}M_x)Q_yP_{3-y}O_{12}$ avec M = Al et/ou Y et Q = Si et/ou Se, $0 \leq x \leq 0,8$ et $0 \leq y \leq 1$ ; ou le $Li_{1+x+y}M_xSc_{2-x}Q_yP_{3-y}O_{12}$ avec M = Al, Y, Ga ou un mélange des trois composés et Q = Si et/ou Se, $0 \leq x \leq 0,8$ et $0 \leq y \leq 1$ ; ou le $Li_{1+x+y+z}M_x(Ga_{1-y}Sc_y)_{2-x}Q_zP_{3-z}O_{12}$ avec $0 \leq x \leq 0,8$ , $0 \leq y \leq 1$ , $0 \leq z \leq 0,6$ avec M = Al ou Y ou un mélange des deux composés et Q= Si et/ou Se ; ou le $Li_{1,x}Zr_{2-x}B_x(PO_4)_3$ avec $0 \leq x \leq 0,25$ ; ou le $Li_{1+x}Zr_{2-x}Ca_x(PO_4)_3$ avec $0 \leq x \leq 0,25$ ; ou $Li_{1+x}M^3_xM_{2-x}P_3O_{12}$ avec $0 \leq x \leq 1$ et $M^3$= Cr, V, Ca, B, Mg, Bi et/ou Mo, M = Sc, Sn, Zr, Hf, Se ou Si, ou un mélange de ces composés ;

○ les borates lithiés, de préférence choisi parmi : le $Li_3(Sc_{2-x}M_x)(BO_3)_3$ avec M=Al ou Y et $0 \leq x \leq 1$ ; le $Li_{1+x}M_x(Sc)_{2-x}(BO_3)_3$ avec M = Al, Y, Ga ou un mélange des trois composés et $0 \leq x \leq 0,8$ ; le $Li_{1+x}M_x(Ga_{1-y}S-$

$c_y)_{2-x}(BO_3)_3$ avec $0 \leq x \leq 0,8$ , $0 \leq y \leq 1$ et M= Al ou Y ; le $Li_{1+x}M_x(Ga)_{2-x}(BO_3)_3$ avec M = Al, Y ou un mélange des deux composés et $0 \leq x \leq 0,8$ ; le $Li_3BO_3$, le $Li_3BO_3$-$Li_2SO_4$, le $Li_3BO_3$-$Li_2SiO_4$, le $Li_3BO_3$-$Li_2SiO_4$-$Li_2SO_4$;

∘ les oxynitrures, de préférence choisis parmi $Li_3PO_{4-x}N_{2x/3}$, $Li_4SiO_{4-x}N_{2x/3}$, $Li_4GeO_{4-x}N_{2x/3}$ avec $0 < x < 4$ ou $Li_3BO_{3-x}N_{2x/3}$ avec $0 < x < 3$ ;

∘ les composés lithiés à base d'oxynitrure de lithium et de phosphore, appelés « LiPON », sous forme de $Li_xPO_yN_z$ avec x ~2,8 et 2y+3z ~7,8 et $0,16 \leq z \leq 0,4$, et en particulier le $Li_{2,9}PO_{3,3}N_{0,46}$, mais également les composés $Li_wPO_xN_yS_z$ avec 2x+3y+2z = 5 = w ou les composés $Li_wPO_xN_yS_z$ avec $3,2 \leq x \leq 3,8$, $0,13 \leq y \leq 0,4$, $0 \leq z \leq 0,2$ , $2,9 \leq w \leq 3,3$ ou les composés sous forme de $Li_tP_xAl_yO_uN_vS_w$ avec 5x+3y=5, 2u+3v+2w=5+t, $2,9 \leq t \leq 3,3$, $0,84 \leq x \leq 0,94$, $0,094 \leq y \leq 0,26$, $3,2 \leq u \leq 3,8$, $0,13 \leq v \leq 0,46$, $0 \leq w \leq 0,2$;

∘ les matériaux à base d'oxynitrures de lithium de phosphore ou de bore, appelés respectivement « LiPON » et « LIBON », pouvant également contenir du silicium, du soufre, du zirconium, de l'aluminium, ou une combinaison d'aluminium, bore, soufre et/ou silicium, et du bore pour les matériaux à base d'oxynitrures de lithium de phosphore ;

∘ les composé lithiés à base d'oxynitrure de lithium, de phosphore et de silicium appelés « LiSiPON », et en particulier le $Li_{1,9}Si_{0,28}P_{1,0}O_{1,1}N_{1,0}$;

∘ les oxynitrures de lithium de types LiBON, LiBSO, LiSiPON, LiSON, thio-LiSiCON, LiPONB (ou B, P et S représentent respectivement le bore, le phosphore et le soufre);

∘ les oxynitrures de lithium de type LiBSO tels que $(1-x)LiBO_2$-$xLi_2SO_4$ avec $0,4 \leq x \leq 0,8$ ;

∘ les oxydes lithiés, de préférence choisis parmi le $Li_7La_3Zr_2O_{12}$ ou le $Li_{5+x}La_3(Zr_x,A_{2-x})O_{12}$ avec A=Sc, Y, Al, Ga et $1,4 \leq x \leq 2$ ou le $Li_{0,35}La_{0,55}TiO_3$ ou le $Li_{3x}La_{2/3-x}TiO_3$ avec $0 \leq x \leq 0,16$ (LLTO);

∘ les silicates, de préférence choisis parmi $Li_2Si_2O_5$, $Li_2SiO_3$, $Li_2Si_2O_6$, $LiAlSiO_4$, $Li_4SiO_4$, $LiAlSi_2O_6$;

∘ les électrolytes solides de type anti-perovskite choisis parmi : $Li_3OA$ avec A un halogénure ou un mélange d'halogénures, de préférence au moins un des éléments choisi parmi F, Cl, Br, I ou un mélange de deux ou trois ou quatre de ces éléments ; $Li_{(3-x)}M_{x/2}OA$ avec $0 < x \leq 3$, M un métal divalent, de préférence au moins un des éléments choisi parmi Mg, Ca, Ba, Sr ou un mélange de deux ou trois ou quatre de ces éléments, A un halogénure ou un mélange d'halogénures, de préférence au moins un des éléments choisi parmi F, Cl, Br, I ou un mélange de deux ou trois ou quatre de ces éléments ; $Li_{(3-x)}M^3_{x/3}OA$ avec $0 \leq x \leq 3$, $M^3$ un métal trivalent, A un halogénure ou un mélange d'halogénures, de préférence au moins un des éléments choisi parmi F, Cl, Br, I ou un mélange de deux ou trois ou quatre de ces éléments ; ou $LiCOX_zY_{(1-z)}$, avec X et Y des halogénures comme mentionnés ci-dessus en relation avec A, et $0 \leq z \leq 1$,

∘ les composés $La_{0,51}Li_{0,34}Ti_{2,94}$, $Li_{3,4}V_{0,4}Ge_{0,6}O_4$, $Li_2O$-$Nb_2O_5$, $LiAlGaSPO_4$;

∘ les formulations à base de $Li_2CO_3$, $B_2O_3$, $Li_2O$, $Al(PO_3)_3LiF$, $P_2S_3$, $Li_2S$, $Li_3N$, $Li_{14}Zn(GeO_4)_4$, $Li_{3,6}Ge_{0,6}V_{0,4}O_4$, $LiTi_2(PO_4)_3$, $Li_{3,25}Ge_{0,25}P_{0,25}S_4$, $Li_{1,3}Al_{0,3}Ti_{1,7}(PO_4)_3$, $Li_{1+x}Al_xM_{2-x}(PO_4)_3$ (où M = Ge, Ti, et/ou Hf, et où $0 < x < 1$), $Li_{1+x+y}Al_xTi_{2-x}Si_yP_{3-y}O_{12}$ (où $0 \leq x \leq 1$ et $0 \leq y \leq 1$).

Avantageusement, cette couche poreuse jouant le rôle de séparateur peut être déposée, de la même manière que les couches d'électrodes sur leur support, par voie électrophorétique , par dip-coating, par le procédé d'impression par jet d'encre ci-après « ink-jet » ou par raclage ci-après « doctor blade », par enduction au rouleau, par enduction au rideau à partir d'une suspension de nanoparticules.

De préférence, les électrodes selon l'invention sont recouvertes d'une couche poreuse jouant le rôle de séparateur puis empilés de manière à ce que ces couches poreuses soient en contact.

Cet empilement comprenant une succession alternée de cathode et d'anode, de préférence en couches minces recouvertes d'une couche poreuse est ensuite pressé à chaud sous vide, étant entendu qu'au moins une cathode ou une anode selon l'invention est employée dans cet empilement. La pression et la température employées lors du pressage à chaud de l'empilement permettant la réalisation de l'assemblage dépendent notamment de la nature des matériaux composant l'empilement et de la taille des particules primaires utilisées pour réaliser les électrodes et la couche poreuse jouant le rôle de séparateur. Avantageusement, l'empilement est placé sous une pression comprise entre 0,5 MPa et 3 MPa, de préférence d'environ 1,5 MPa puis est séché sous vide. Ceci permet de maintenir l'empilement lors du séchage. Les plateaux de la presse sont ensuite chauffés à une température de consigne, de préférence de 450 °C avec une vitesse de quelques degrés °C par secondes. A 450 °C, l'empilement est ensuite thermo-comprimé sous une pression permettant l'assemblage de l'empilement, de préférence de 45 MPa pendant 1 minute, puis le système est refroidi à température ambiante.

Une fois l'assemblage réalisé, un système rigide, multicouche constitué d'une ou de plusieurs cellules assemblées est obtenu.

Dans un mode de réalisation avantageux on applique une couche diélectrique (i.e. un isolant électronique) très mince, couvrante et de préférence sans défauts, sur cet empilement thermo-comprimé. Ceci permet de recouvrir en un seul traitement l'ensemble des surfaces des anodes 12, cathodes 22 et/ou des couches poreuses 13, 23 jouant le rôle de séparateur d'une couche diélectrique (i.e. un isolant électronique) très mince, couvrante et de préférence sans défauts. Outre le fait de passiver la surface des électrodes, ce traitement permet de ne recouvrir que les surfaces accessibles de la structure mésoporeuse, i.e. les surfaces qui seront ultérieurement en contact avec les électrolytes. Ce dépôt améliore les performances des batteries à ions de lithium comportant au moins une électrode poreuse selon l'invention. L'amélioration constatée consiste essentiellement en une réduction des réactions faradiques à l'interface entre l'électrolyte et l'électrode. De manière très avantageuse ce dépôt est réalisé par une technique permettant un revêtement enrobant (appelé aussi « dépôt conforme »), i.e. un dépôt qui reproduit fidèlement la topographie atomique du substrat sur lequel il est appliqué. Les techniques de ALD (Atomic Layer Déposition) ou de CSD (Chemical Solution Déposition), connues en tant que telles, peuvent convenir. Ces techniques de dépôt par ALD et par CSD permettent de réaliser un revêtement qui tapisse la totalité de la surface des électrodes. Ce revêtement enrobant présente typiquement une épaisseur inférieure à 5 nm, de préférence comprise entre 1 nm et 5 nm.

L'architecture entièrement solide, sans matériaux organiques, des batteries comprenant une électrode selon l'invention, résiste aux fortes températures et est compatible avec les procédés de dépôt par ALD.

La couche diélectrique appliquée sur l'empilement thermo-comprimé pour protéger et passiver les surfaces accessibles de cet empilement peut être par exemple de la silice, de la zircone, de l'alumine $Al_2O_3$. Cette couche diélectrique peut aussi être un conducteur ionique, qui présente alors avantageusement une conductivité électronique inférieure à $10^{-8}$ S/cm. Ce matériau doit être choisi de manière à ne pas insérer, aux tensions de fonctionnement de la batterie, du lithium mais uniquement à le transporter. On peut utiliser à ce titre par exemple le $Li_3PO_4$, le $Li_3BO_3$, le lithium lanthane zirconium oxyde (appelé « LLZO »), tel que le $Li_7La_3Zr_2O_{12}$, qui présentent une large gamme de potentiel de fonctionnement.

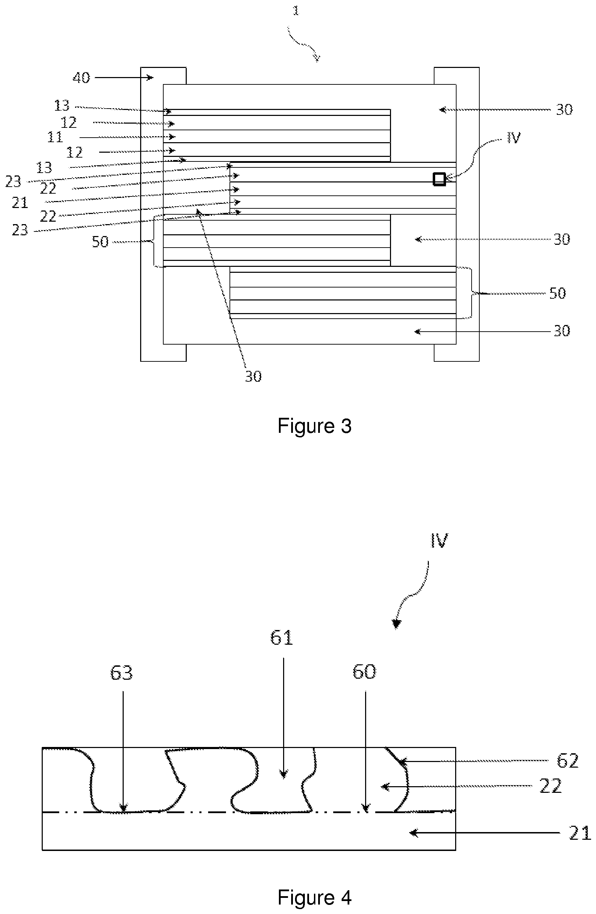

Cependant, comme illustré en figure 4, la couche diélectrique 62, 63 appliquée par ALD ou CSD sur l'empilement thermo-comprimé ne recouvrent que la surface du dépôt poreux et une partie de la surface du collecteur de courant.

La couche diélectrique appliquée par ALD ou CSD sur l'empilement thermo-comprimé, d'épaisseur inférieure à 5 nm, n'empêche pas le passage des électrons. L'électrode étant partiellement frittée, les électrons passent par la soudure (le necking) entre les particules de matériau d'électrode. La zone de « soudure » 60 entre le dépôt mesoporeux et le substrat n'est pas recouvert par la couche diélectrique.

La couche diélectrique appliquée par ALD ou CSD ne recouvre que les surfaces libres des pores 61, notamment les surfaces accessibles des électrodes 22 et celles du substrat 21. Les matériaux employés pour réaliser cette couche diélectrique, sont particulièrement efficaces pour bloquer les réactions électrochimiques de dissolution. De plus les dépôts isolants réalisés par ALD ou CSD sont particulièrement performants lorsqu'il s'agit de protection contre la corrosion. Ils sont certes de fine épaisseur, mais totalement couvrants, sans défauts.

La couche diélectrique peut être constituée d'un empilement de films minces, formant une structure multicouche. Ces films minces peuvent être de nature chimique différente de manière à former une structure multicouche et multimatériaux. Par ailleurs, la performance contre la corrosion de la couche diélectrique est d'autant meilleure qu'elle est constituée d'un empilement de films minces, de préférence, constituée d'un empilement de films minces formant une structure diélectrique multicouche et multimatériaux. A titre d'exemple, une couche diélectrique comprenant un film de 2nm d'$Al_2O_3$ et un film de 2nm de $ZrO_2$ est plus performante qu'une couche diélectrique comprenant un unique film de 4nm d'$Al_2O_3$. La couche diélectrique, qu'elle soit épaisse et/ou de structure multicouche, permet de parfaitement bien protéger le substrat de la corrosion induite par l'utilisation d'électrolytes liquides, sans nuire au passage des électrons.

Au niveau des interfaces seuls les ions lithium doivent passer et pas les électrons. Des isolants conducteurs ioniques tels que le $Li_3PO_4$ peuvent être utilisés comme couche diélectrique en plus fortes épaisseurs, de préférence entre 1 et 5 nm, sans affecter le fonctionnement de la batterie. Une couche diélectrique de structure multicouche peut également être déposée par ALD ou par CSD, comprenant une première couche déposée sur l'empilement thermo-comprimé d'un matériau isolant conducteur ionique tel qu'un électrolyte solide d'épaisseur de préférence comprise entre 1 et 5 nm, et d'une deuxième couche déposée sur cette première couche d'un matériau isolant ionique et électronique et présentant une très fine épaisseur, idéalement moins de 1 nm pour ne pas rendre la batterie trop résistive.

Cet assemblage, revêtu ou non d'une couche diélectrique, peut ensuite être imprégné par une phase porteuse d'ions de lithium, de préférence dans une solution électrolytique.

4. Imprégnation de la batterie assemblée et plus particulièrement des couches d'électrodes et du séparateur de la batterie

Une fois l'assemblage d'un empilement constitutif d'une batterie par pressage à chaud terminé, il peut être imprégné d'une phase porteuse d'ions de lithium. Cette phase peut être une solution formée par un sel de lithium dissout dans un solvant organique ou un mélange de solvants organiques, et/ou dissout dans un polymère contenant au moins un sel de lithium, et/ou dissout dans un liquide ionique (i.e. un sel de lithium fondu) contenant au moins un sel de lithium. Cette phase peut également être une solution formée à partir d'un mélange de ces composants. Les inventeurs ont trouvé que les électrodes poreuses selon l'invention sont capables d'absorber une phase liquide par simple capillarité. Cet effet tout à fait inattendu est spécifique aux dépôts d'électrodes poreuses, de préférence mésoporeuses selon l'invention ; il est particulièrement favorisé lorsque le diamètre moyen $D_{50}$ des pores se situe entre 2 nm et 80 nm, de préférence entre 2 nm et 50 nm, préférentiellement entre 6 nm et 30 nm, préférentiellement entre 8 nm et 20 nm. Les pores de cet assemblage, de préférence lorsqu'il est réalisé en matériaux céramiques, peuvent facilement être mouillés par un liquide ionique, par des mélanges de liquides ioniques ou par une solution comprenant au moins 50% massique d'au moins un liquide ionique dilué avec un solvant organique ou dilué avec un mélange de solvants organiques. Ses pores sont imprégnés par la phase porteuse d'ions de lithium, i.e. par un électrolyte, tel qu'un liquide ionique contenant des sels de lithium, possiblement dilué avec un solvant organique ou un mélange de solvants organiques contenant un sel de lithium pouvant être différent de celui dissous dans le liquide ionique.

L'imprégnation peut se faire soit pour l'anode, soit pour la cathode, soit encore pour les deux à la fois.

Dans un mode de réalisation avantageux de l'invention, l'électrode poreuse, de préférence mésoporeuse présente une porosité supérieure à 30% en volume, des pores de diamètre moyen $D_{50}$ inférieur à 80 nm, de préférence inférieur à 50 nm, un diamètre primaire de particules inférieur à 30 nm. Son épaisseur est avantageusement inférieure à 100 $\mu$m, inférieure à 50 $\mu$m, inférieure à 10 $\mu$m, et préférentiellement compris entre 2,5 $\mu$m et 4,5 $\mu$m, de manière à réduire l'épaisseur finale de la batterie. Elle est exempte de liant. Avantageusement l'électrode poreuse, de préférence en couche mince, présente une porosité comprise entre 35% et 50% en volume, et encore plus préférentiellement entre 40 % et 50 % en volume ; elle est de préférence mésoporeuse.

Dans un mode de réalisation avantageux de l'invention, la couche poreuse jouant le rôle de séparateur, présente une porosité supérieure à 30% en volume, des pores de diamètre moyen $D_{50}$ inférieur à 50 nm. Cette couche poreuse jouant le rôle de séparateur est capable d'absorber une phase liquide telle qu'une phase porteuse d'ions de lithium par simple capillarité dans ses pores. Cet effet est particulièrement favorisé lorsque le diamètre moyen $D_{50}$ des mésopores se situe entre 2 nm et 50 nm, de préférence entre 6 nm et 30 nm, préférentiellement entre 8 nm et 20 nm. Son épaisseur est avantageusement inférieure à 10 $\mu$m. Elle est exempte de liant. Avantageusement la porosité de la couche poreuse jouant le rôle de séparateur est comprise entre 35% et 50% en volume, et encore plus préférentiellement entre 40 % et 50 % en volume; elle est de préférence mésoporeuse.

Le liquide « nanoconfiné » ou « nanopiégé » dans les porosités, de préférence dans les mésoporosités, ne peut plus ressortir. Il est lié par un phénomène appelé ici « absorption dans la structure mésoporeuse » (qui ne semble pas avoir été décrit dans la littérature dans le contexte des batteries à ions de lithium) et ne peut plus sortir même lorsque la cellule est mise sous vide. La batterie est alors considérée comme quasi-solide.

La phase porteuse d'ions de lithium peut être un liquide ionique contenant des sels de lithium, possiblement dilué avec un solvant organique ou avec un mélange de solvants organiques contenant un sel de lithium pouvant être différent de celui dissous dans le liquide ionique.

Le liquide ionique est constitué d'un cation associé à un anion ; cet anion et ce cation sont choisis de manière à ce que le liquide ionique soit à l'état liquide dans la plage de température de fonctionnement de l'accumulateur. Le liquide ionique présente l'avantage d'avoir une stabilité thermique élevée, une inflammabilité réduite, d'être non volatile, d'être peu toxique et une bonne mouillabilité des céramiques, qui sont des matières pouvant être employées comme matériaux d'électrode. De manière surprenante, le pourcentage massique de liquide ionique contenu dans la phase porteuse d'ions de lithium peut être supérieur à 50%, de préférence supérieure à 60% et encore plus préférentiellement supérieure à 70%, et ce contrairement aux batteries à ions de lithium de l'art antérieur où le pourcentage massique de liquide ionique dans l'électrolyte doit être inférieur à 50% massique pour que la batterie conserve une capacité et une tension élevées en décharge ainsi qu'une bonne stabilité en cyclage. Au-delà de 50% massique la capacité de la batterie de l'art antérieur se dégrade, comme indiqué dans la demande US 2010/209 783 A1. Ceci peut être explicité par la présence de liants polymériques au sein de l'électrolyte de la batterie de l'art antérieur ; ces liants sont faiblement mouillés par le liquide ionique induisant une mauvaise conduction ionique au sein de la phase porteuse d'ions de lithium provoquant ainsi une dégradation de la capacité de la batterie.

Les batteries utilisant une électrode poreuse selon l'invention sont, de préférence, exemptes de liant. De ce fait, ces batteries peuvent employer une phase porteuse d'ions de lithium comprenant plus de 50% massique d'au moins un liquide ionique sans dégrader la capacité finale de la batterie.

La phase porteuse d'ions de lithium peut comprendre un mélange de plusieurs liquides ioniques.

Avantageusement, le liquide ionique peut être un cation de type 1-Ethyl-3-methylimidazolium (appelé aussi EMI+) et/ou le n-propyl-n-methylpyrrolidinium (appelé aussi $PYR_{13}^+$) et/ou le n-butyl-n-methylpyrrolidinium (appelé aussi $PYR_{14}^+$), associés à des anions de type bis (trifluoromethanesulfonyl)imide (TFSI⁻) et/ou bis(fluorosulfonyl)imide (FSI⁻). Pour former un électrolyte, un sel de lithium tel que du LiTFSI peut être dissous dans le liquide ionique qui sert de solvant ou dans un solvant tel que la $\gamma$-butyrolactone. La $\gamma$ - butyrolactone empêche la cristallisation des liquides ioniques induisant une plage de fonctionnement en température de ces derniers plus importante, notamment à basse température.

La phase porteuse d'ions de lithium peut être une solution électrolytique comprenant du PYR14TFSI et du LiTFSI ; ces abréviations seront définies ci-dessous.

Avantageusement, lorsque l'anode ou la cathode poreuse comprend un phosphate lithié, la phase porteuse d'ions de lithium comprend un électrolyte solide tel que du $LiBH_4$ ou un mélange de $LiBH_4$ avec un ou plusieurs composés choisis parmi LiCl, Lil et LiBr. Le $LiBH_4$ est un bon conducteur du lithium et possède un point de fusion bas facilitant son imprégnation dans les électrodes poreuses, notamment par trempage. Du fait de ses propriétés extrêmement réductrices,

le LiBH$_4$ est peu utilisé comme électrolyte. L'emploi d'un film protecteur en surface des électrodes poreuses en phosphate lithié empêche la réduction des matériaux d'électrodes, notamment des matériaux de cathode, par le LiBH$_4$ et évite la dégradation des électrodes.

Avantageusement, la phase porteuse d'ions de lithium comprend au moins un liquide ionique, de préférence au moins un liquide ionique à température ambiante, tel que du PYR14TFSI, éventuellement dilué dans au moins un solvant, tel que la γ-butyrolactone. Avantageusement, la phase porteuse d'ions de lithium comprend entre 10% et 40% massique d'un solvant, de préférence entre 30 et 40% massique d'un solvant, et encore plus préférentiellement entre 30 et 40% massique de γ-butyrolactone.

Avantageusement la phase porteuse d'ions de lithium comprend plus de 50% massique d'au moins un liquide ionique et moins de 50% de solvant, ce qui limite les risques de sécurité et d'inflammation en cas de dysfonctionnement des batteries comprenant une telle phase porteuse d'ions de lithium.

Avantageusement, la phase porteuse d'ions de lithium comprend :

- entre 30 et 40% massique d'un solvant, de préférence entre 30 et 40% massique de γ-butyrolactone, et
- plus de 50% massique d'au moins un liquide ionique, depréférence plus de 50% massique de PYR14TFSI.

La phase porteuse d'ions de lithium peut être une solution électrolytique comprenant du PYR14TFSI, du LiTFSI et de la γ-butyrolactone, de préférence une solution électrolytique comprenant environ 90% massique de PYR14TFSI, 0,7 M de LiTFSI et 10% massique de γ-butyrolactone.

Après imprégnation par une phase liquide porteuse d'ions de lithium, l'assemblage est séché, de préférence, par une lame de N$_2$ conduisant à l'obtention d'une batterie à ions de lithium comprenant au moins une, voire plusieurs cellules électrochimiques, chacune comprenant des électrodes selon l'invention.

Nous décrivons ici la réalisation d'une batterie avec un séparateur à base d'un électrolyte solide, à base de Li$_3$Al$_{0,4}$Sc$_{1,6}$(PO$_4$)$_3$. On réalise la couches mésoporeuse de cathode (LiMn$_2$O$_4$), revêtues d'une couche mésoporeuse de Li$_3$Al$_{0,4}$Sc$_{1,6}$(PO$_4$)$_3$, et la couche mésoporeuse d'anode (Li$_4$Ti$_5$O$_{12}$), également revêtue d'une couche mésoporeuse de Li$_3$Al$_{0,4}$Sc$_{1,6}$(PO$_4$)$_3$.

La suspension de nanoparticules de matériau d'électrolyte est préparée par voie hydrothermale, ce qui conduit directement à des nanoparticules de bonne cristallinité. On dépose la couche d'électrolyte par électrophorèse, par le procédé d'impression par jet d'encre ci-après « ink-jet », par raclage ci-après « doctor blade », par enduction au rouleau, par enduction au rideau ou par dip-coating sur la couche de cathode et/ou sur la couche d'anode, décrites ci-dessus, préalablement ou non revêtues(s) d'une couche diélectrique déposée par ALD. L'assemblage se fait par pression à chaud, sous atmosphère inerte, à une température comprise entre 300 °C et 500 °C, de préférence entre 350 °C et 450 °C et une pression comprise entre 50 MPa et 100 MPa, par exemple à 350 °C et 100 MPa.

Ensuite, cette cellule, qui est totalement solide et rigide, et qui ne contient aucun matériau organique, est imprégnée par immersion dans un électrolyte liquide conducteur des ions de lithium. Du fait de la porosité ouverte et de la faible taille des porosités (inférieures à 50 nm), l'imprégnation dans l'ensemble de la cellule (électrode et séparateur en Li$_3$Al$_{0,4}$Sc$_{1,6}$(PO$_4$)$_3$ mésoporeux) se fait par capillarité. L'électrolyte liquide peut être par exemple du LiPF$_6$ ou du LiBF$_4$ dissout dans un solvant aprotique, ou un liquide ionique contenant des sels de lithium. Les liquides ioniques et électrolytes organiques peuvent également être mélangés. On peut par exemple mélanger à 50 % massiques le LiPF$_6$ dissous dans EC/DMC avec un liquide ionique contenant des sels de lithium de type LiTFSI :PYR14TFSI 1:9 mol. On peut également réaliser des mélanges de liquides ioniques pouvant fonctionner à basse température comme par exemple le mélange LiTFSI :PYR13FSI :PYR14TFSI (2 :9 :9 mol ratio).

EC est l'abréviation courante de carbonate d'éthylène (n° CAS : 96-49-1). DMC est l'abréviation courante de carbonate de diméthyle (n° CAS : 616-38-6). LITFSI est l'abréviation courante de lithium bis-trifluorométhanesulfonimide (n° CAS : 90076-65-6). PYR13FSI est l'abréviation courante de N-Propyl-N-Méthylpyrrolidinium bis(fluorosulfonyl) imide. PYR14TFSI est l'abréviation courante de 1-butyl-1-méthylpyrrolidinium bis(trifluoro-méthanesulfonyl)imide.

Nous décrivons ici un autre exemple de fabrication d'une batterie à ions de lithium selon l'invention. Ce procédé comprend les étapes de :

(1) Approvisionnement d'une suspension colloïdale comprenant des agrégats ou des agglomérats de nanoparticules d'au moins un matériau de cathode de diamètre primaire moyen D$_{50}$ inférieur ou égal à 50 nm ;
(2) Approvisionnement d'une suspension colloïdale comprenant des agrégats ou des agglomérats de nanoparticules d'au moins un matériau d'anode de diamètre primaire moyen D$_{50}$ inférieur ou égal à 50 nm ;
(3) Approvisionnement d'au moins deux substrats conducteurs plats, de préférence métalliques, lesdits substrats conducteurs pouvant servir comme collecteurs de courant de la batterie,
(4) Dépôt d'au moins une couche de cathode, respectivement d'anode, par dip-coating, par le procédé d'impression par jet d'encre ci-après « ink-jet », par raclage ci-après « doctor blade », par enduction au rouleau, par enduction au rideau ou par électrophorèse, de préférence par électrodéposition galvanostatique par courants pulsés, à partir de ladite suspension de nanoparticules de matériau approvisionnée à l'étape (1), respectivement à l'étape (2), sur ledit substrat approvisionné à l'étape (3),

(5) Séchage de la couche ainsi obtenue à l'étape (4),

(6) Optionnellement, déposition par ALD d'une couche d'un matériau isolant électriquement sur et à l'intérieur des pores de la couche de cathode, et/ou d'anode obtenue à l'étape (5),

(7) Déposition, de préférence par électrophorèse, par dip-coating, par le procédé d'impression par jet d'encre, par raclage, par enduction au rouleau ou par enduction au rideau, d'un film, de préférence poreux, préférentiellement mésoporeux, d'un matériau isolant électriquement ou d'un matériau conducteur ionique ou d'un matériau isolant électriquement éventuellement conducteur ionique à partir d'une suspension colloïdale de nanoparticules de ce matériau agrégées ou agglomées de diamètre primaire moyen $D_{50}$ inférieur ou égal à 50 nm et de diamètre moyen $D_{50}$ d'environ 100 nm sur la couche de cathode, respectivement d'anode obtenue à l'étape (5) et/ou l'étape (6),

(8) Séchage de la couche ainsi obtenue à l'étape (7),

(9) Réalisation d'un empilement comprenant une succession alternée des couches de cathode et d'anode, de préférence décalé latéralement,

(10) Pressage à chaud des couches d'anode et de cathode obtenues à l'étape (9) de manière à juxtaposer les films obtenus à l'étape (8) présents sur les couches d'anode et de cathode, et à obtenir un empilmeent assemblé,

(11) Optionnellement, déposition par ALD d'une couche d'un matériau isolant électroniquement sur l'empilement thermocomprimé obtenu à l'étape (10),

(12) Imprégnation de la structure obtenue à l'étape (10) par une phase porteuse d'ions de lithium conduisant à l'obtention d'une structure imprégnée, de préférence une cellule.

L'ordre des étapes (1), (2) et (3) n'a pas d'importance.

On obtient ainsi une cellule batterie à ions de lithium de très forte densité de puissance. Le liquide « nanoconfiné » ou « nanopiégé » dans les mésoporosités ne peut plus ressortir comme indiqué ci-dessus ; la batterie est alors considérée comme quasi-solide.

On préfère déposer par ALD une couche d'un matériau isolant électroniquement sur l'empilement thermocomprimé (i.e. empilement thermoassemblé) obtenu à l'étape (10) que d'effectuer ce dépôt à l'étape (6) ; il est plus simple d'effectuer le dépôt par ALD d'une couche d'un matériau isolant électroniquement sur un empilement thermocomprimé que de l'effectuer sur chaque électrode séparément.

Nous décrivons ici la fabrication d'une batterie aux ions de lithium qui convient bien pour l'utilisation à basse température. Comme indiqué ci-dessus, la résistance série d'une batterie augmente lorsque la température baisse. Pour une batterie aux ions de lithium entièrement solide (telle que décrite par exemple dans les demande de brevet WO 2013/064 781 ou WO 2013/064 779), la conductivité ionique de l'électrolyte diminue environ de moitié lorsque la température baisse de 7 °C. Pour résoudre ce problème on utilise une batterie selon l'invention avec des électrodes mésoporeuses, une couche poreuse, de préférence mésoporeuse jouant le rôle de séparateur, que l'on imprègne par un électrolyte qui est, de préférence, un liquide ionique comportant des ions de lithium ; le liquide ionique peut être dilué par ajout d'un solvant organique approprié. On peut par exemple utiliser un mélange à 50 % massiques de $LiPF_6$ dans EC/DMC avec du LiTFSI :PYR14TFSI 1:9 mol ou utiliser une solution électrolytique comprenant 90% massique de PYR14TFSI, 0,7 M de LiTFSI et 10% massique de γ-butyrolactone. L'imprégnation se fait après assemblage d'un empilement comprenant une succession alternée des couches de cathode et d'anode recouvertes d'une couche poreuse jouant le rôle de séparateur, comme cela vient d'être décrit, après l'étape (11).

A titre d'exemple, le dépôt des électrodes, soit de l'anode, soit de la cathode, ou encore, ce qui est préféré, des deux, peut se faire avec des nanoparticules agrégées ou agglomérées d'un diamètre moyen $D_{50}$ d'environ 100 nm, obtenues à partir de nanoparticules primaires d'un diamètre moyen $D_{50}$ inférieur ou égal à 50 nm ; chaque électrode peut avoir une épaisseur d'environ 4 μm.

Le procédé selon l'invention peut être utilisé pour la fabrication d'électrodes poreuses ou mésoporeuses, notamment en couche mince ou en couche plus épaisse d'environ 50 μm ou 100 μm, d'épaisseur, dans des dispositifs électroniques, électriques ou électrotechniques, et de préférence dans des dispositifs sélectionnés dans le groupe formé par : les batteries, les condensateurs, les supercondensateurs, les capacités, les résistances, les inductances, les transistors, les cellules photovoltaïques.

5. Encapsulation

La batterie ou l'assemblage, système rigide multicouche constitué d'une ou de plusieurs cellules assemblées, revêtu ou non d'une couche diélectrique, éventuellement imprégné par une phase porteuse d'ions de lithium, doit ensuite être encapsulé(e) par une méthode appropriée pour assurer sa protection vis-à-vis de l'atmosphère. Le système d'encapsulation 30 comprend au moins une couche, et représente de préférence un empilement de plusieurs couches. Si le système d'encapsulation 30 est composé d'une seule couche, elle doit être déposée par, ALD ou être en parylène et/ou en polyimide. Ces couches d'encapsulation doivent être stables chimiquement, résister aux fortes températures et être imperméables à l'atmosphère (couche barrières). On peut utiliser une des méthodes décrites dans les demandes de brevet WO 2017/115 032, WO 2016/001584, WO2016/001588 ou WO 2014/131997. De préférence, ladite au moins une couche d'encapsulation revêt quatre des six faces de ladite batterie, les deux autres faces de la batterie étant revêtues par les terminaisons.

Avantageusement, la batterie ou l'assemblage, peut être recouvert(e) d'un système d'encapsulation 30 formé par un empilement de plusieurs couches, à savoir d'une séquence, de préférence de z séquences, comprenant :

- une première couche de recouvrement, de préférence choisi parmi le parylène, le parylène de type F, le polyimide, les résines epoxy, le silicone, le polyamide et/ou un mélange de ceux-ci, déposée sur l'empilement de feuilles d'anode et de cathode,

- une deuxième couche de recouvrement composée d'une matière électriquement isolante, déposée par dépôt de couches atomiques sur ladite première couche de recouvrement.

Cette séquence peut être répétée z fois avec $z \geq 1$. Cette séquence multicouche a un effet barrière. Plus la séquence du système d'encapsulation sera répétée, plus cet effet barrière sera important. Il sera d'autant plus important que les couches minces déposées seront nombreuses.

Avantageusement, la première couche de recouvrement est une couche polymérique, par exemple en silicone (déposé par exemple par imprégnation ou par dépôt chimique en phase vapeur assisté par plasma à partir d'hexaméthyldisiloxane (HMDSO)), ou en résine epoxy, ou en polyimide, en polyamide, ou en poly-para-xylylène (plus connu sous le terme parylène), de préférence à base de polyimide et/ou de parylène. Cette première couche de recouvrement permet de protéger les éléments sensibles de la batterie de son environnement. L'épaisseur de ladite première couche de recouvrement est, de préférence, comprise entre 0.5 $\mu$m et 3 $\mu$m.

Avantageusement, la première couche de recouvrement peut être en parylène de type C, en parylène de type D, en parylène de type N (CAS 1633-22-3), en parylène de type F ou un mélange de parylène de type C, D, N et/ou F. Le parylène (appelé aussi polyparaxylylène ou poly(p-xylylène)) est un matériau diélectrique, transparent, semi cristallin qui présente une grande stabilité thermodynamique, une excellente résistance aux solvants ainsi qu'une très faible perméabilité. Le parylène a également des propriétés barrières permettant de protéger la batterie de son environnement externe. La protection de la batterie est accrue lorsque cette première couche de recouvrement est réalisée à partir de parylène de type F. Elle peut être déposée sous vide, par une technique de dépôt chimique en phase vapeur (CVD). Cette première couche d'encapsulation est avantageusement obtenue à partir de la condensation de monomères gazeux déposés par une technique de dépôt chimique en phase vapeur (CVD) sur les surfaces, ce qui permet d'avoir un recouvrement conformal, mince et uniforme de l'ensemble des surfaces de l'empilement accessibles. Elle permet de suivre les variations de volume de la batterie lors de son fonctionnement et facilite la découpe propre des batteries de par ses propriétés élastiques. L'épaisseur de cette première couche d'encapsulation est comprise entre 2 $\mu$m et 10 $\mu$m, de préférence comprise entre 2 $\mu$m et 5 $\mu$m et encore plus préférentiellement d'environ 3 $\mu$m. Elle permet de recouvrir l'ensemble des surfaces accessibles de l'empilement, de fermer uniquement en surface l'accès aux pores de ces surfaces accessibles et d'uniformiser la nature chimique du substrat. La première couche de recouvrement ne rentre pas dans les pores de la batterie ou de l'assemblage, la taille des polymères déposés étant trop grande pour qu'ils rentrent dans les pores de l'empilement.

Cette première couche de recouvrement est avantageusement rigide ; elle ne peut pas être considérée comme une surface souple. L'encapsulation peut ainsi être réalisée directement sur les empilements, le revêtement pouvant pénétrer dans l'ensemble des cavités disponibles. Il est rappelé ici que grâce à l'absence de liant dans les porosités des électrodes selon l'invention et/ou de l'électrolyte, la batterie peut subir des traitements sous vide.

Dans un mode de réalisation on dépose une première couche de parylène, tel qu'une couche de parylène C, de parylène D, une couche de parylène N (CAS 1633-22-3) ou une couche comprenant un mélange de parylène C, D et/ou N. Le parylène (appelé aussi polyparaxylylène ou poly(p-xylylène)) est un matériau diélectrique, transparent, semi cristallin qui présente une grande stabilité thermodynamique, une excellente résistance aux solvants ainsi qu'une très faible perméabilité.

Cette couche de parylène protège les éléments sensibles de la batterie de leur environnement. Cette protection est accrue lorsque cette première couche d'encapsulation est réalisée à partir de parylène N. Toutefois, les inventeurs ont observé que cette première couche, lorsqu'elle est à base de parylène, ne présente pas une stabilité suffisante en présence d'oxygène. Lorsque cette première couche est à base de polyimide, elle ne présente pas une étanchéité suffisante, notamment en présence d'eau. Pour ces raisons on dépose une deuxième couche qui enrobe la première couche.

Avantageusement, une deuxième couche de recouvrement composée d'une matière électriquement isolante, de préférence inorganique, peut être déposée par une technique de dépôt conformal, telle que le dépôt de couches atomiques (ALD) sur cette première couche. Ainsi on obtient un recouvrement conformal de l'ensemble des surfaces accessibles de l'empilement préalablement recouvert de la première couche de recouvrement, de préférence d'une première couche de parylène et/ou de polyimide ; cette deuxième couche est de préférence une couche inorganique.

La croissance de la couche déposée par ALD est influencée par la nature du substrat. Une couche déposée par ALD sur un substrat présentant différentes zones de natures chimiques différentes aura une croissance inhomogène, pouvant engendrer une perte d'intégrité de cette deuxième couche de protection.

Les techniques de dépôt par ALD sont particulièrement bien adaptées pour recouvrir des surfaces présentant une forte rugosité de manière totalement étanche et conforme. Elles permettent de réaliser des couches conformales, exemptes de défauts, tels que des trous (couches dits « pinhole free », exempts de trous) et représentent de très bonnes barrières. Leur coefficient WVTR est extrêmement faible. Le coefficient WVTR (water vapor transmission rate) permet d'évaluer la perméance à la vapeur d'eau du système d'encapsulation. Plus le coefficient WVTR est faible plus le système d'encapsulation est étanche. A titre d'exemple, une couche d'$Al_2O_3$ de 100 nm d'épaisseur déposée par ALD présente une perméation à la vapeur d'eau de 0,00034 g/m$^2$.d. La deuxième couche de recouvrement peut être en matériau céramique, en matériau vitreux ou en matériau vitrocéramique, par exemple sous forme d'oxyde, de type $Al_2O_3$, de nitrure, de phosphates, d'oxynitrure, ou de siloxane. Cette deuxième couche de recouvrement présente une épaisseur inférieure à 200 nm, de préférence comprise entre 5 nm et 200 nm, plus préférentiellement comprise entre 10 nm et 100 nm, entre 10 nm et 50 nm, et encore plus préférentiellement de l'ordre d'une cinquantaine de nanomètres. On préfère une technique de dépôt conformal, telle que le dépôt de couches atomiques (ALD).

Cette deuxième couche de recouvrement déposée par ALD sur la première couche polymérique permet d'une part, d'assurer l'étanchéité de la structure, i.e. d'empêcher la migration de l'eau à l'intérieur de la structure et d'autre part de protéger la première couche de recouvrement, de préférence de parylène et/ou de polyimide, préférentiellement de parylène de type F, de l'atmosphère, notamment de l'air et de l'humidité, des expositions thermiques afin d'éviter sa dégradation. Cette seconde couche améliore la durée de vie de la batterie encapsulée.

Toutefois, ces couches déposées par ALD sont très fragiles mécaniquement et nécessitent une surface d'appui rigide pour assurer leur rôle protecteur. Le dépôt d'une couche fragile sur une surface souple conduirait à la formation de fissures, engendrant une perte d'intégrité de cette couche de protection.

Avantageusement, une troisième couche de recouvrement est déposée sur la deuxième couche de recouvrement ou sur un système d'encapsulation 30 formé par un empilement de plusieurs couches comme décrit précédemment, à savoir d'une séquence, de préférence de z séquences du système d'encapsulation avec z ≥ 1, pour augmenter la protection des cellules batteries de leur environnement externe. Typiquement, cette troisième couche est en polymère, par exemple en silicone (déposé par exemple par imprégnation ou par dépôt chimique en phase vapeur assisté par plasma à partir d'hexaméthyldisiloxane (HMDSO)), ou en résine epoxy, ou en polyimide, ou en parylène. En outre, le système d'encapsulation peut comprendre une succession alternée de couches de parylène et/ou de polyimide, de préférence d'environ 3 $\mu$m d'épaisseur, et de couches composées d'une matière électriquement isolante telles que des couches inorganiques déposées de manière conformale par ALD comme décrit précédemment pour créer un système d'encapsulation multi-couches. Afin d'améliorer les performances de l'encapsulation, le système d'encapsulation peut avantageusement comprendre une première couche de parylène et/ou de polyimide, de préférence d'environ 3 $\mu$m d'épaisseur, une deuxième couche composée d'une matière électriquement isolante, de préférence une couche inorganique, déposée de manière conformale par ALD sur la première couche, une troisième couche de parylène et/ou de polyimide, de préférence d'environ 3 $\mu$m d'épaisseur déposée sur la deuxième couche et une quatrième couche composée d'une matière électriquement isolante déposée de manière conformale par ALD sur la troisième couche.

La batterie ou l'assemblage ainsi encapsulé(e) dans cette séquence du système d'encapsulation, de préférence dans z séquences, peut ensuite être revêtu d'une dernière couche de recouvrement de manière à protéger mécaniquement l'empilement ainsi encapsulé et éventuellement lui conférer un aspect esthétique. Cette dernière couche de recouvrement protège et améliore la durée de vie de la batterie. Avantageusement cette dernière couche de recouvrement est également choisie pour résister à une température élevée, et présente une résistance mécanique suffisante pour protéger la batterie lors de son utilisation ultérieure. Avantageusement, l'épaisseur de cette dernière couche de recouvrement est comprise entre 1 $\mu$m et 50 $\mu$m. Idéalement, l'épaisseur de cette dernière couche de recouvrement est d'environ 10-15 $\mu$m, une telle gamme d'épaisseur permet de protéger la batterie contre l'endommagement mécanique.

Avantageusement, une dernière couche de recouvrement est déposée sur un système d'encapsulation formé par un empilement de plusieurs couches comme décrit précédemment, à savoir d'une séquence, de préférence de z séquences du système d'encapsulation avec z ≥ 1, de préférence sur cette succession alternée de couches de parylène ou de polyimide, de préférence d'environ 3 $\mu$m d'épaisseur et de couches inorganiques déposées de manière conformale par ALD, pour augmenter la protection des cellules batteries de leur environnement externe et les protéger contre l'endommagement mécanique. Cette dernière couche d'encapsulation présente, de préférence, une épaisseur d'environ 10-15 $\mu$m.

Cette dernière couche de recouvrement est de préférence à base de résine epoxy, de polyéthylène naphtalate (PEN), de polyimide, de polyamide, de polyuréthane, de silicone, de silice sol-gel ou de silice organique. Avantageusement, cette dernière couche de recouvrement est déposée par trempage. Typiquement, cette dernière couche est en polymère, par exemple en silicone (déposé par exemple par trempage ou par dépôt chimique en phase vapeur assisté par plasma à partir d'hexaméthyldisiloxane (HMDSO)), ou en résine epoxy, ou en polyimide, ou en parylène. Par exemple, on peut déposer par injection d'une couche de silicone (épaisseur typique environ 15 $\mu$m) pour protéger la batterie contre l'endommagement mécanique. Le choix d'un tel matériau vient du fait qu'il résiste à des températures élevées et la batterie peut ainsi être assemblée aisément par soudure sur des cartes électroniques sans apparition de transitions vitreuses. Avantageusement, l'encapsulation de la batterie est réalisée sur quatre des six faces de l'empilement. Les couches d'encapsulation entourent la périphérie de l'empilement, le reste de la protection à l'atmosphère étant assuré par les couches obtenues par les terminaisons. Après l'étape d'encapsulation, l'empilement ainsi encapsulé est ensuite découpé suivant des plans de coupe permettant d'obtenir des composants de batterie unitaires, avec la mise à nue sur chacun des plans de coupe des connexions anodiques et cathodiques 50 de la batterie, de sorte que le système d'encapsulation 30 revêt quatre des six faces de ladite batterie, de préférence de manière continue, afin que le système puisse être assemblé sans soudure, les deux autres faces de la batterie étant revêtues ultérieurement par les terminaisons 40.

Dans un mode de réalisation avantageux, l'empilement ainsi encapsulé et découpé, peut être imprégné, sous atmosphère anhydre, par une phase porteuse d'ions de lithium telle qu'un liquide ionique contenant des sels de lithium, possiblement dilué dans un solvant organique ou un mélange de solvants organiques contenant un sel de lithium pouvant être différent de celui dissous dans le liquide ionique, comme présenté au paragraphe 10 de la présente demande. L'imprégnation peut être réalisée par trempage dans une solution électrolytique telle qu'un liquide ionique contenant des sels de lithium, possiblement dilué dans un solvant organique ou un mélange de solvants organiques contenant un sel de lithium pouvant être différent de celui dissous dans le liquide ionique. Le liquide ionique rentre instantanément par capillarité dans les porosités.

Après l'étape d'encapsulation, de découpe et éventuellement d'imprégnation de la batterie, des terminaisons 40 sont ajoutées pour établir les contacts électriques nécessaires au bon fonctionnement de la batterie.

6. Terminaison

Avantageusement, la batterie comprend des terminaisons 40 au niveau où les collecteurs de courant cathodique, respectivement anodique, sont apparents. De préférence, les connexions anodiques et les connexions cathodiques se trouvent sur les côtés opposés de l'empilement.

Sur et autour de ces connexions 50 est déposé un système de terminaison 40. Les connexions peuvent être métallisées à l'aide de techniques de dépôt plasma connu de l'homme du métier, de préférence par ALD et / ou par immersion dans une résine époxy conductrice chargée à l'argent et / ou un bain d'étain en fusion. De préférence, les terminaisons sont constituées d'un empilement de couches comprenant successivement une première couche mince de recouvrement électroniquement conductrice, de préférence métallique, déposée par ALD, une deuxième couche en résine époxy chargée en argent déposée sur la première couche et une troisième couche à base d'étain déposée sur la deuxième couche. La première couche conductrice déposée par ALD sert à protéger la section de la batterie de l'humidité. Cette première couche conductrice déposée par ALD est optionnelle. Elle permet d'augmenter la durée de vie calendaire de la batterie en réduisant le WVTR au niveau de la terminaison. Cette première couche mince de recouvrement peut notamment être métallique ou à base de nitrure métallique. La seconde couche en résine époxy chargée en argent, permet de procurer de la « souplesse » à la connectique sans rompre le contact électrique lorsque le circuit électrique est soumis à des contraintes thermiques et/ou vibratoires.

La troisième couche de métallisation à base d'étain sert à assurer la soudabilité du composant.

Dans un autre mode de réalisation, cette troisième couche peut être composée de deux couches de matériaux différents. Une première couche venant au contact de la couche en résine époxy chargée en argent. Cette couche est en nickel et est réalisée par dépôt électrolytique. La couche de nickel sert de barrière thermique et protège le reste du composant de la diffusion pendant les étapes d'assemblage par refusion. La dernière couche, déposée sur la couche de nickel est également une couche de métallisation, préférentiellement en étain pour rendre l'interface compatible des assemblages par refusion. Cette couche d'étain peut être déposée soit par trempage dans un bain d'étain fondu soit par électrodéposition ; ces techniques sont connues en tant que telles.

Pour certains assemblages sur des pistes en cuivre par microcâblage, il peut être nécessaire d'avoir une dernière couche de métallisation en cuivre. Une telle couche peut être réalisé par électrodéposition à la place de l'étain.

Dans un autre mode de réalisation, les terminaisons 40 peuvent être constituées d'un empilement de couches comprenant successivement une couche en résine époxy chargée en argent et une deuxième couche à base d'étain ou de nickel déposée sur la première couche.

Dans un autre mode de réalisation, les terminaisons 40 peuvent être constituées d'un empilement de couches comprenant successivement une couche de polymère conducteur telle qu'une couche en résine époxy chargée en argent, une deuxième couche à base de nickel déposée sur la première couche et une troisième couche à base d'étain ou de cuivre. Dans un mode de réalisation préférentiel, les terminaisons 40 peuvent être constituées de différentes couches qui sont respectivement, de manière non limitative, une couche de polymère conducteur tel qu'une résine époxy chargée à l'argent, une couche de nickel et une couche d'étain.

Dans un autre mode de réalisation préférentiel, les terminaisons 40 sont constituées, aux abords des connexions cathodique et anodique, d'un premier empilement de couches comprenant successivement une première couche d'un matériau chargé en graphite, de préférence en résine époxy chargée de graphite, et une deuxième couche comprenant du cuivre métallique obtenue à partir d'une encre chargée en nanoparticules de cuivre déposée sur la première couche. Ce premier empilement des terminaisons est ensuite fritté par lampe flash infra-rouge de manière à obtenir un recouvrement des connexions cathodique et anodique par une couche de cuivre métallique.

En fonction de l'utilisation finale de la batterie, les terminaisons peuvent comprendre, de manière additionnelle, un deuxième empilement de couches disposé sur le premier empilement des terminaisons comprenant successivement une première couche d'un alliage étain-zinc déposé, de préférence par trempage dans un bain d'étain-zinc en fusion, afin d'assurer l'étanchéité de la batterie à moindre coût et une deuxième couche à base d'étain pur déposée par électrodéposition ou une deuxième couche comprenant un alliage à base d'argent, de palladium et de cuivre déposée sur cette première couche du deuxième empilement.

Les terminaisons permettent de reprendre les connections électriques alternativement positives et négatives sur chacune des extrémités de la batterie. Ces terminaisons 40 permettent de réaliser les connections électriques en parallèle entre les différents éléments de batterie. Pour cela, seule les connections cathodiques 50 sortent sur une extrémité, et les connections anodiques 50 sont disponibles sur une autre extrémité. Avantageusement, les connexions anodiques et cathodiques 50 se trouvent sur les côtés opposés de l'empilement.

Avantageusement, après l'étape (11) du procédé de fabrication d'une batterie à ions de lithium selon l'invention :

- on dépose successivement, de manière alternée, sur la structure imprégnée :

  ▪ au moins une première couche de parylène et/ou de polyimide sur ladite batterie,
  ▪ au moins une deuxième couche composée d'une matière électriquement isolante par ALD (Atomic Layer Deposition) sur ladite première couche de parylène et/ou de polyimide,
  ▪ et sur la succession alternée d'au moins une première et d'au moins une deuxième couche est déposée une couche permettant de protéger la batterie contre l'endommagement mécanique de la batterie, de préférence en silicone, en résine époxy, ou en polyimide ou en parylène, formant ainsi, un système d'encapsulation de la batterie,

- on découpe selon deux plans de coupe, la structure imprégnée ainsi encapsulée pour mettre à nue sur chacun des plans de coupes des connexions anodiques et cathodiques de la batterie, de sorte que le système d'encapsulation revêt quatre des six faces de ladite batterie, de préférence de manière continue, de manière à obtenir une batterie élémentaire,
- on dépose successivement, sur et autour, de ces connexions anodiques et cathodiques :

  ▪ une première couche électroniquement conductrice, optionnelle, de préférence déposée par ALD,
  ▪ une seconde couche à base de résine époxy chargée à l'argent, déposée sur la première couche électroniquement conductrice, et
  ▪ une troisième couche à base de nickel, déposée sur la deuxième couche, et
  ▪ une quatrième couche à base d'étain ou de cuivre, déposée sur la troisième couche.

Dans un autre mode de réalisation préféré, on fabrique une batterie à ions de lithium selon l'invention par le procédé comprenant les étapes suivantes :

(1)

a) Approvisionnement d'une suspension colloïdale comprenant des agrégats ou des agglomérats de nanoparticules d'au moins un matériau de cathode de diamètre primaire moyen $D_{50}$ inférieur ou égal à 50 nm ;
b) Approvisionnement d'une suspension colloïdale comprenant des agrégats ou des agglomérats de nanoparticules d'au moins un matériau d'anode de diamètre primaire moyen $D_{50}$ inférieur ou égal à 50 nm ;
c) Approvisionnement d'au moins deux substrats conducteurs plats, de préférence métalliques, lesdits substrats conducteurs pouvant servir comme collecteurs de courant de la batterie,

(2) Dépôt d'au moins une couche de cathode, respectivement d'anode, par dip-coating, par le procédé d'impression par jet d'encre ci-après « ink-jet », par raclage ci-après « doctor blade », par enduction au rouleau, par enduction au rideau ou par électrophorèse, de préférence par électrodéposition galvanostatique par courants pulsés, à partir de ladite suspension de nanoparticules de matériau approvisionnée à l'étape (1), respectivement à l'étape (2), sur ledit substrat approvisionné à l'étape (1),

(3) Séchage de la couche ainsi obtenue à l'étape (2),

(4) Optionnellement, déposition par ALD d'une couche d'un matériau isolant électriquement sur et à l'intérieur des pores de la couche de cathode, et/ou d'anode obtenue à l'étape (3),

(5) Déposition, de préférence par électrophorèse, par le procédé d'impression par jet d'encre, par raclage, par enduction au rouleau, par enduction au rideau ou par dip-coating, d'un film de préférence poreux, plus préférentiellement mésoporeux, d'un matériau isolant électriquement éventuellement conducteur ionique à partir d'une suspension colloïdale de nanoparticules de ce matériau agrégées ou agglomérées de diamètre primaire moyen $D_{50}$ inférieur ou égal à 50 nm et de diamètre moyen $D_{50}$ d'environ 100 nm sur la couche de cathode, respectivement d'anode obtenue à l'étape (3) et/ou l'étape (4),

(6) Séchage de la couche ainsi obtenue à l'étape (5),

(7) Réalisation d'un empilement comprenant une succession alternée des couches de cathode et d'anode, de préférence décalé latéralement,

(8) Pressage à chaud des couches d'anode et de cathode obtenues à l'étape (7) de manière à juxtaposer les films obtenus à l'étape (6) présents sur les couches d'anode et de cathode, et à obtenir un empilement assemblé,

(9) Optionnellement, déposition par ALD d'une couche d'un matériau isolant électriquement sur et à l'intérieur des pores de l'empilement assemblé.

L'ordre des étapes (1a), (1b) et (1c) n'a pas d'importance.

On préfère déposer par ALD une couche d'un matériau isolant électroniquement sur l'empilement assemblé obtenu à l'étape (8) que d'effectuer ce dépôt à l'étape (4) ; il est plus simple d'effectuer le dépôt par ALD d'une couche d'un matériau isolant électroniquement sur un empilement thermoassemblé ou thermocomprimé que de l'effectuer sur chaque électrode séparément.

Après l'étape (8) ou après l'étape (9) du procédé de fabrication d'une batterie à ions de lithium selon l'invention:

- on dépose successivement, de manière alternée, sur l'empilement assemblé, un système d'encapsulation formé par une succession de couches, à savoir une séquence, de préférence de z séquences, comprenant :

    ▪ une première couche de recouvrement, de préférence choisi parmi le parylène, le parylène de type F, le polyimide, les résines epoxy, le silicone, le polyamide et/ou un mélange de ceux-ci, déposée sur l'empilement assemblé,
    ▪ une deuxième couche de recouvrement composée d'une matière électriquement isolante, déposée par dépôt de couches atomiques sur ladite première couche de recouvrement,
    ▪ cette séquence pouvant être répétée z fois avec z ≥ 1,

- on dépose une dernière couche de recouvrement sur cette succession de couches d'un matériau choisi parmi la résine époxy, le polyéthylène naphtalate (PEN), le polyimide, le polyamide, le polyuréthane, le silicone, la silice sol-gel ou la silice organique,
- on découpe selon deux plans de coupe, l'empilement assemblé ainsi encapsulé pour mettre à nue sur chacun des plans de coupes des connexions anodiques et cathodiques de l'empilement assemblé, de sorte que le système d'encapsulation revêt quatre des six faces dudit empilement assemblé, de préférence de manière continue, de manière à obtenir une batterie élémentaire,
- on imprègne la batterie élémentaire encapsulée et découpée par une phase porteuse d'ions de lithium,
- on dépose successivement, sur et autour, de ces connexions anodiques et cathodiques :

    ▪ une première couche d'un matériau chargé en graphite, de préférence en résine époxy chargée de graphite,
    ▪ une deuxième couche comprenant du cuivre métallique obtenue à partir d'une encre chargée en nanoparticules de cuivre déposée sur la première couche,

- on traite thermiquement les couches obtenues, de préférence par lampe flash infra-rouge, de manière à obtenir un recouvrement des connexions cathodique et anodique par une couche de cuivre métallique,
- éventuellement, on dépose successivement, sur et autour, de ce premier empilement des terminaisons, un deuxième empilement comprenant :

    ▪ une première couche d'un alliage étain-zinc déposé, de préférence par trempage dans un bain d'étain-zinc en fusion, afin d'assurer l'étanchéité de la batterie à moindre coût, et

- une deuxième couche à base d'étain pur déposée par électrodéposition ou une deuxième couche comprenant un alliage à base d'argent, de palladium et de cuivre déposée sur cette première couche du deuxième empilement.

Avantageusement, les connexions anodiques et cathodiques se trouvent sur les côtés opposés de l'empilement.

Tous les modes de réalisation relatifs au dépôt de la couche diélectrique présenté à la section 5, à l'assemblage de la batterie, à l'imprégnation de la batterie assemblée, au dépôt du système d'encapsulation et des terminaisons décrits ci-dessus peuvent être combinés indépendamment les uns des autres entre eux, du moment que cette combinaison est réaliste pour l'homme du métier.

## Exemples

Exemple 1 : Réalisation d'une cathode mésoporeuse à base de $LiMn_2O_4$:

On a préparé une suspension de nanoparticules de $LiMn_2O_4$ par synthèse hydrothermale : 14,85 g de $LiOH,H_2O$ ont été dissous dans 500 ml d'eau. On a ajouté à cette solution 43,1g de $KMnO_4$ et versé cette phase liquide dans un autoclave. Sous agitation on a ajouté 28 ml d'isobutyraldéhyde et de l'eau jusqu'à atteindre un volume total de 3,54 l. L'autoclave a ensuite été chauffé à 180°C et maintenu à cette température pendant 6 heures. Après refroidissement lent on a obtenu un précipité noir en suspension dans le solvant. Ce précipité a été soumis à une succession d'étapes de centrifugation - redispersion dans l'eau, jusqu'à obtenir une suspension agrégée avec une conductivité d'environ 300 $\mu$S/cm et un potentiel zeta de -30mV. La taille des particules primaires était très homogène (monodisperse), de l'ordre de 10 nm à 20 nm, et les agrégats avaient une taille comprise entre 100 nm et 200 nm. Le produit a été caractérisé par diffraction aux rayons X et microscopie électronique.

On a déposé ces agrégats par électrophorèse sur des feuillards en acier inoxydable (316L) d'une épaisseur de 5 $\mu$m, en milieu aqueux, en appliquant des courants pulsés de 0,6 A en pointe et 0,2 A en moyenne ; la tension appliquée était de l'ordre de 4 à 6 V pendant 400 s. On a ainsi obtenu un dépôt d'environ 4 $\mu$m d'épaisseur. Il a été séché dans une étuve contrôlée en température et d'humidité afin d'éviter la formation de fissures au séchage. Il a été consolidé à 600 °C pendant 1 h dans l'air afin de souder les nanoparticules entre elles, d'améliorer l'adhérence au substrat et de parfaire la recristallisation du $LiMn_2O_4$. La couche présente une porosité ouverte d'environ 45 % en volume avec des pores d'une taille comprise entre 10 nm et 20 nm (voir ci-dessous, exemple 5).

Dans une variante de ce procédé, on a obtenu une suspension colloïdale monodisperse d'une taille de particules comprise entre 20 nm et 30 nm, qui était stable, avec un potentiel zêta de l'ordre de 55 mV. Afin d'obtenir des agrégats de taille définie, on a ajouté une solution de LiOH pour déstabiliser la suspension, jusqu'à l'obtention d'agrégats de tailles de l'ordre de 100 nm ; le potentiel zêta de cette suspension était alors de 35 mV, et sa conductivité supérieure à plusieurs centaines de $\mu$S/cm. A partir de cette suspension colloïdale on a déposé par électrophorèse une couche d'une épaisseur de 4 $\mu$m sur une feuille en acier inoxydable (316L) de 5 $\mu$m d'épaisseur. La distance entre l'électrode et les contre-électrodes était de l'ordre de 1 cm, la densité de courant était de l'ordre de 6 mA/cm$^2$. La durée des impulsions en courant était de 5 ms, et le temps de repose entre impulsions de 1 ms. Le séchage et la consolidation ont été effectués comme décrit ci-dessus.

A noter que dans cet exemple la suspension colloïdale comporte naturellement des agrégats, dû à la charge ionique résiduelle. Si l'on pousse la purification plus loin, par davantage d'étapes de centrifugation et/ou des techniques d'ultrafiltration, on obtient alors une suspension monodisperse stable avec une conductivité inférieure à 100 $\mu$S/cm. Cette suspension ne comporte pas d'agrégats, et pour qu'elle puisse être utilisé pour l'étape d'électrophorèse il faut la déstabiliser, par ajout de LiOH.

Exemple 2 : Réalisation d'une cathode mésoporeuse à base de $LiCoO_2$

On a préparé une suspension de nanoparticules cristallines de $LiCoO_2$ par synthèse hydrothermale. Pour 100 ml de suspension, le mélange réactionnel a été réalisé par ajout de 20 ml d'une solution aqueuse à 0,5M de nitrate de cobalt hexahydraté additionnés sous agitation dans 20 ml d'une solution à 3M d'hydroxyde de lithium monohydraté suivi d'une addition goutte à goutte de 20 ml d'$H_2O_2$ à 50%. Le mélange réactionnel a été placé dans un autoclave à 200°C pendant 1 heure ; la pression dans l'autoclave atteignait environ 15 bars.

On an obtenu un précipité noir en suspension dans le solvant. Ce précipité a été soumis à une succession d'étapes de centrifugation - redispersion dans l'eau, jusqu'à obtenir une suspension avec une conductivité d'environ 200 $\mu$S/cm et un potentiel zêta de -30mV. La taille des particules primaires était de l'ordre de 10 nm à 20 nm et les agrégats avaient une taille comprise entre 100 nm et 200 nm. Le produit a été caractérisé par diffraction aux rayons X et microscopie électronique.

On a déposé ces agrégats par électrophorèse sur des feuillards en acier inoxydables d'une épaisseur de 5

$\mu$m, en milieu aqueux, en appliquant des courants pulsés de 0,6 A en pointe et 0,2 A en moyenne ; la tension appliquée était de l'ordre de 4 à 6 V pendant 400 s. On a ainsi obtenu un dépôt d'environ 4 $\mu$m d'épaisseur. Il a été consolidé à 600°C pendant 1 h dans l'air afin de souder les nanoparticules entre elles, d'améliorer l'adhérence au substrat et de parfaire la recristallisation du LiCoO$_2$.

Exemple 3 : Réalisation d'une anode mésoporeuse à base de Li$_4$Ti$_5$O$_{12}$

On a préparé une suspension de nanoparticules de Li$_4$Ti$_5$O$_{12}$ par synthèse glycothermale : 190 ml de 1,4-butanediol ont été versés dans un bécher, et 4,25 g d'acétate de lithium a été ajouté sous agitation. La solution a été maintenue sous agitation jusqu'à ce que l'acétate soit complément dissous. 16,9 g de butoxyde de titane ont été prélevés sous atmosphère inerte et introduit dans la solution d'acétate. La solution a ensuite été agitée pendant quelques minutes avant d'être transférée dans un autoclave préalablement remplie de 60 ml supplémentaires de butanediol. L'autoclave a ensuite été fermé et purgé à l'azote pendant au moins 10 minutes. L'autoclave a ensuite été chauffé jusqu'à 300 °C à une vitesse de 3 °C/min et maintenue à cette température pendant 2 heures, sous agitation. A la fin, on a laissé refroidir, toujours sous agitation.

On a obtenu un précipité blanc en suspension dans le solvant. Ce précipité a été soumis à une succession d'étapes de centrifugation - redispersion dans l'éthanol pour obtenir une suspension colloïdale pure, avec une faible conductivité ionique. Elle comportait des agrégats d'environ 150 nm constitués de particules primaires de 10 nm. Le potentiel zêta était de l'ordre de -45 mV. Le produit a été caractérisé par diffraction aux rayons X et microscopie électronique. La figure 1(a) montre un diffractogramme, la figure 1(b) un cliché obtenu par microscopie électronique à transmission de particules primaires.

On a déposé ces agrégats par électrophorèse sur des feuillards en acier inoxydables d'une épaisseur de 5 $\mu$m, en milieu aqueux, en appliquant des courants pulsés de 0,6 A en pointe et 0,2 A en moyenne ; la tension appliquée était de l'ordre de 3 à 5 V pendant 500 s. On a ainsi obtenu un dépôt d'environ 4 $\mu$m d'épaisseur. Il a été consolidé par un recuit RTA à 40 % de puissance pendant 1 s sous azote afin de souder les nanoparticules entre elles, d'améliorer l'adhérence au substrat et de parfaire la recristallisation du Li$_4$Ti$_5$O$_{12}$.

Exemple 4 : Réalisation d'un revêtement par ALD sur les électrodes mésoporeuses (cas d'un dépôt d'alumine sur une cathode)

On a déposé une couche mince d'alumine dans un réacteur ALD P300B (fournisseur : Picosun), sous une pression d'argon de 2 mbars à 180°C. L'argon est utilisé ici à la fois comme gaz porteur et pour la purge. Avant chaque dépôt un temps de séchage de 3 heures a été appliqué. Les précurseurs utilisés étaient l'eau et le TMA (trimethylaluminium). Un cycle de dépôt était constitué des étapes suivantes :

- Injection du TMA pendant 200 ms
- Purge de la chambre avec l'Ar pendant 6 secondes
- Injection de l'eau pendant 50 ms
- Purge de la chambre avec l'Ar pendant 6 secondes

14 cycles sont appliqués pour atteindre une épaisseur de revêtement de 1,6 nm. Après ces différents cycles, un séchage sous vide à 120°C pendant 12 heures a été appliqué pour éliminer les résidus de réactifs en surface.

Exemple 5 : Détermination de la surface spécifique et du volume poreux

On a déterminé la surface spécifique par la technique BET (Brunauer - Emmett - Teller), connue de l'homme du métier, sur une couche de LiMn$_2$O$_4$ (abrégé ici « LMO ») obtenue par un procédé similaire à celui décrit à l'exemple 1 ci-dessus. Les échantillons étaient des dépôts recuits de LMO d'une épaisseur de 2 $\mu$m déposée sur chacune des deux faces d'une feuille d'inox (épaisseur 5 $\mu$m), avec un grammage de 0,6 mg/cm$^2$ par face (soit 1,2 mg/cm$^2$ sur les 2 faces). Deux feuilles de 5 X 10 cm ont été découpées au laser, enroulées l'une sur l'autre, et insérées dans la cellule en verre du dispositif BET. Le gaz adsorbant utilisé pour l'analyse était le N$_2$. Les résultats sont les suivants :

| | |
|---|---|
| Masse totale de l'échantillon (feuille + dépôt) : | 0,512 g |
| Masse de dépôt (m) | 0,120 g |
| Masse de dépôt après 5h sous vide à 150°C | 0,117 g |
| Surface spécifique BET (S) | 43,80 m$^2$/g |
| Volume de pores (V) | 0,2016 cm$^3$/g |

(suite)

| Diamètre des pores (D= 4V/A) | 20 nm |
|---|---|

La méthode BET ne permet de caractériser que la porosité ouverte de diamètre inférieur à 50 nm (le diamètre de pore est calculé en considérant que les pores sont cylindriques). L'estimation de la porosité ouverte de dimension supérieure à 50 nm nécessiterait d'utiliser d'autres méthodes (intrusion de mercure). On peut remarquer cependant que ce diamètre limite correspond à la porosité maximale mesurée en FIB sur les dépôts de LMO hydrothermal. La surface spécifique de la poudre de LMO obtenue par synthèse hydrothermale était de 160 $m^2/g$ (déterminée par ailleurs).

Dans l'hypothèse où l'on voudrait imprégner toute la porosité disponible d'un disque d'électrode El-Cell de diamètre 18 mm et de grammage en LMO de 0,6 $mg/cm^2$, il faudrait un volume d'électrolyte égal à 2,3 μL. La densité théorique du LMO, $d_{LMO}$, est égale à 4,29 $g/cm^3$. La porosité correspond au volume de vide sur le volume total occupé par le dépôt ce qui donne le rapport suivant :

$$porosité = \frac{V_{vide}}{V_{total}} = \frac{V * m}{\frac{m}{d_{LMO}} + V * m} = \frac{V}{\frac{1}{d_{LMO}} + V} = \frac{0,2016}{\frac{1}{4,29} + 0,2016} = 46.4\%$$

La porosité obtenue par ce calcul (46,4%) est très proche de la porosité estimée par mesure de la masse du dépôt et de son épaisseur moyenne (40-50%).

On peut donc en conclure que la porosité dans les couches de LMO déposées par le procédé selon l'invention est majoritairement de la porosité ouverte.

Exemple 6 : Fabrication d'une batterie utilisant des électrodes selon l'invention

Plusieurs anodes, respectivement cathodes, en couches minces ont été réalisées selon l'exemple 3, respectivement l'exemple 2. Ces électrodes ont été recouvertes d'une couche poreuse à partir d'une suspension de nanoparticules de $Li_3PO_4$ comme indiqué ci-dessous.

a. Réalisation d'une suspension de nanoparticules de $Li_3PO_4$

Deux solutions ont été préparées :
11,44 g de $CH_3COOLi$, $2H_2O$ ont été dissous dans 112 ml d'eau, puis 56 ml d'eau ont été ajoutés sous vive agitation au milieu afin d'obtenir une solution A.

4,0584g de $H_3PO_4$ ont été dilués dans 105,6 ml d'eau, puis 45,6 ml d'éthanol ont été ajoutés à cette solution afin d'obtenir une seconde solution appelée ci-après solution B.

La solution B a ensuite été ajoutée, sous vive agitation, à la solution A.

La solution obtenue, parfaitement limpide après disparition des bulles formées au cours du mélange, a été ajoutée à 1,2 litres d'acétone sous action d'un homogénéiseur de type Ultraturrax™ afin d'homogénéiser le milieu. On a immédiatement observé une précipitation blanche en suspension dans la phase liquide.

Le milieu réactionnel a été homogénéisé pendant 5 minutes puis a été maintenu 10 minutes sous agitation magnétique. On a laissé décanter pendant 1 à 2 heures. Le surnageant a été écarté puis la suspension restante a été centrifugée 10 minutes à 6000 rpm. Ensuite on a ajouté 300 ml d'eau pour remettre le précipité en suspension (utilisation d'une sonotrode, agitation magnétique). Sous vive agitation, on a ajouté 125 ml d'une solution de tripolyphosphate de sodium à 100g/l à la suspension colloïdale ainsi obtenue. La suspension est ainsi devenue plus stable. La suspension a ensuite été soniquée à l'aide d'une sonotrode. La suspension a ensuite été centrifugée 15 minutes à 8000 rpm. Le culot a ensuite été redispersé dans 150 ml d'eau. Puis la suspension obtenue a de nouveau été centrifugée 15 minutes à 8000 rpm et les culots obtenus redispersés dans 300 ml d'éthanol afin d'obtenir une suspension apte à la réalisation d'un dépôt électrophorétique.

Des agglomérats d'environ 100 nm constitués de particules primaires de $Li_3PO_4$ de 10 nm ont ainsi été obtenus en suspension dans l'éthanol.

b. Réalisation sur les couches d'anode et de cathode précédemment élaborées d'une couche poreuse à partir de la suspension de nanoparticules de $Li_3PO_4$ précédemment décrite dans la partie a)

Des couches minces poreuses de $Li_3PO_4$ ont ensuite été déposées par électrophorèse sur la surface des anode et cathode précédemment élaborées en appliquant un champ électrique de 20V/cm à la suspension de nano-

particules de $Li_3PO_4$ précédemment obtenue, pendant 90 secondes pour obtenir une couche d'1,5 $\mu$m. La couche a ensuite été séchée à l'air à 120°C puis un traitement de calcination à 350°C pendant 60 minutes a été effectué sur cette couche préalablement séchée afin d'éliminer toute trace de résidus organiques.

c. Réalisation d'une cellule électrochimique

Après avoir déposé 1,5 $\mu$m de $Li_3PO_4$ poreux sur l'électrode $LiCoO_2$ élaborée selon l'exemple 2 et sur l'électrode $Li_4Ti_5O_{12}$ élaborée selon l'exemple 3, les deux sous-systèmes ont été empilés de manière à ce que les films de $Li_3PO_4$ soient en contact. Cet empilement a ensuite été pressé à chaud sous vide.

Pour ce faire, l'empilement a été placé sous une pression de 1,5 MPa puis séché sous vide pendant 30 minutes à $10^{-3}$ bar. Les plateaux de la presse ont ensuite été chauffés à 450 °C avec une vitesse de 4 °C/secondes. A 450 °C, l'empilement a ensuite été thermo-comprimé sous une pression de 45 MPa pendant 1 minute, puis le système a été refroidi à température ambiante.

Une fois l'assemblage réalisé, un système rigide, multicouche constitué d'une cellule assemblée a été obtenu.

Cet assemblage a ensuite été imprégné dans une solution électrolytique comprenant du PYR14TFSI et du LiTFSI à 0,7 M. Le liquide ionique rentre instantanément par capillarité dans les porosités. Le système a été maintenu en immersion pendant 1 minute, puis la surface de l'empilement de cellule a été séchée par une lame de $N_2$.

d. Réalisation d'une batterie comprenant plusieurs cellules électrochimiques

Plusieurs anodes, respectivement cathodes, en couches minces, ont été réalisées selon l'exemple 3, respectivement l'exemple 2. Ces électrodes ont été recouvertes d'une couche poreuse à partir d'une suspension de nanoparticules de $Li_3PO_4$ comme indiqué ci-dessous. Après avoir déposé 1,5 $\mu$m de $Li_3PO_4$ poreux sur chacune des électrodes ($LiCoO_2$ et $Li_4Ti_5O_{12}$) précédemment élaborées, les deux sous-systèmes ont été empilés de manière à ce que les films de $Li_3PO_4$ soient en contact. Cet empilement comprenant une succession alternée de cathode et d'anode en couches minces recouvertes d'une couche poreuse et dont les films de $Li_3PO_4$ étaient en contact, a ensuite été pressé à chaud sous vide.

Pour ce faire, l'empilement a été placé sous une pression de 1,5 MPa puis séché sous vide pendant 30 minutes à $10^{-3}$ bar. Les plateaux de la presse ont ensuite été chauffés à 450 °C avec une vitesse de 4 °C/secondes. A 450 °C, l'empilement a ensuite été thermo-comprimé sous une pression de 45 MPa pendant 1 minute, puis le système a été refroidi à température ambiante.

Une fois l'assemblage réalisé, un système rigide, multicouche constitué de plusieurs cellules assemblées a été obtenu.

Cet assemblage a ensuite été imprégné dans une solution électrolytique comprenant du PYR14TFSI et du LiTFSI à 0,7 M. Le liquide ionique rentre instantanément par capillarité dans les porosités. Le système a été maintenu en immersion pendant 1 minute, puis la surface de l'empilement de cellule a été séchée par une lame de $N_2$.

Une batterie à ions de lithium comprenant plusieurs cellules électrochimiques, chacune comprenant des électrodes selon l'invention, a ainsi été obtenue.

**Revendications**

1. Procédé de fabrication d'une électrode poreuse, ladite électrode comprenant une couche déposée sur un substrat, ladite couche étant exempte de liant et présentant une porosité supérieure à 30% en volume, et de préférence inférieure à 50% en volume, et des pores de diamètre moyen inférieur à 50 nm, ledit procédé étant **caractérisé en ce que** :

   (a) on approvisionne une suspension colloïdale comprenant des agrégats ou des agglomérats de nanoparticules d'au moins un matériau P de diamètre primaire moyen $D_{50}$ inférieur ou égal à 80 nm, et de préférence inférieur ou égal à 50 nm, lesdits agrégats ou agglomérats présentant un diamètre moyen compris entre 80 nm et 300 nm (de préférence entre 100 nm à 200 nm),
   (b) on approvisionne un substrat,
   (c) on dépose sur ledit substrat une couche d'électrode poreuse, de préférence mésoporeuse par électrophorèse, par le procédé d'impression par jet d'encre, par raclage, par enduction au rouleau, par enduction au rideau ou par dip-coating, à partir de ladite suspension colloïdale approvisionnée à l'étape (a),
   (d) on sèche ladite couche obtenue à l'étape (c), de préférence sous un flux d'air,
   (e) optionnellement, consolidation de la couche d'électrode poreuse, de préférence mésoporeuse obtenue à l'étape (d) par pressage et/ou chauffage.

**2.** Procédé de fabrication d'une électrode poreuse selon la revendication 1, dans lequel :

(a1) on approvisionne une suspension colloïdale comportant des nanoparticules d'au moins un matériau P de diamètre primaire moyen $D_{50}$ inférieur ou égal à 80 nm, et de préférence inférieur ou égal à 50 nm ;

(a2) on déstabilise les nanoparticules présentes dans la dite suspension colloïdale de manière à former des agrégats ou des agglomérats de particules de diamètre moyen compris entre 80 nm et 300 nm, de préférence entre 100 nm et 200 nm, ladite déstabilisation se faisant de préférence par ajout d'un agent déstabilisant tel qu'un sel, de préférence du LiOH ;

(b) on approvisionne un substrat ;

(c) on dépose sur ledit substrat une couche d'électrode mésoporeuse par électrophorèse, par le procédé d'impression par jet d'encre, par raclage, par enduction au rouleau, par enduction au rideau ou par dip-coating, à partir de ladite suspension colloïdale comprenant les agrégats ou les agglomérats de nanoparticules obtenus à l'étape (a2)

(d) on sèche ladite couche, de préférence sous un flux d'air ;

(e) optionnellement, consolidation de la couche d'électrode mésoporeuse obtenue à l'étape (d) par pressage et/ou chauffage.

**3.** Procédé selon l'une des revendications 1 à 2, dans lequel le diamètre desdites nanoparticules est compris entre 10 nm et 50 nm, de préférence entre 10 nm et 30 nm.

**4.** Procédé selon l'une quelconque des revendications 1 à 3, dans lequel le diamètre moyen des pores est compris entre 2 nm et 80 nm, de préférence compris entre 2 nm et 50 nm, préférentiellement compris entre 6 nm et 30 nm et encore plus préférentiellement entre 8 nm et 20 nm.

**5.** Procédé selon l'une quelconque des revendications 1 à 4, dans lequel ladite électrode est une cathode, et ledit matériau P est sélectionné dans le groupe formé par :

o les oxydes $LiMn_2O_4$, $Li_{1+x}Mn_{2-x}O_4$ avec 0 < x < 0,15, $LiCoO_2$, $LiNiO_2$, $LiMn_{1,5}Ni_{0,5}O_4$, $LiMn_{1,5}Ni_{0,5-x}X_xO_4$ où X est sélectionné parmi Al, Fe, Cr, Co, Rh, Nd, autres terres rares tels que Sc, Y, Lu, La, Ce, Pr, Pm, Sm, Eu, Gd, Tb, Dy, Ho, Er, Tm, Yb, et où 0 < x < 0,1, $LiMn_{2-x}M_xO_4$ avec M = Er, Dy, Gd, Tb, Yb, Al, Y, Ni, Co, Ti, Sn, As, Mg ou un mélange de ces composés et où 0 < x < 0,4, $LiFeO_2$, $LiMn_{1/3}Ni_{1/3}Co_{1/3}O_2$, ,$LiNi_{0,8}Co_{0,15}Al_{0,05}O_2$, $LiAl_xMn_{2-x}O_4$ avec $0 \leq x < 0,15$, $LiNi_{1/x}Co_{1/y}Mn_{1/z}O_2$ avec x+y+z =10 ;

o les phosphates $LiFePO_4$, $LiMnPO_4$, $LiCoPO_4$, $LiNiPO_4$, $Li_3V_2(PO_4)_3$; les phosphates de formule $LiMM'PO_4$, avec M et M' (M ≠ M') sélectionnés parmi Fe, Mn, Ni, Co, V ;

o toutes les formes lithiées des chalcogénides suivants : $V_2O_5$, $V_3O_8$, $TiS_2$, les oxysulfures de titane ($TiO_yS_z$ avec z=2-y et $0,3 \leq y \leq 1$), les oxysulfures de tungstène ($WO_yS_z$ avec 0.6<y<3 et 0.1<z<2), CuS, $CuS_2$, de préférence $Li_xV_2O_5$ avec 0 <x<2, $Li_xV_3O_8$ avec 0 < x $\leq$ 1,7, $Li_xTiS_2$ avec 0 < x $\leq$ 1, les oxysulfures de titane et de lithium $Li_xTiO_yS_z$ avec z=2-y, $0,3 \leq y \leq 1$, $Li_xWO_yS_z$, $Li_xCuS$, $Li_xCuS_2$.

**6.** Procédé selon l'une quelconque des revendications 1 à 5, dans lequel ladite électrode est une anode, et ledit matériau P est sélectionné dans le groupe formé par :

o les nanotubes de carbone, le graphène, le graphite ;

o le phosphate de fer lithié (de formule typique $LiFePO_4$) ;

o les oxynitrures mixtes de silicium et étain (de formule typique $Si_aSn_bO_yN_z$ avec a>0, b>0, a+b$\leq$2, 0<y$\leq$4, 0<z$\leq$3) (appelés aussi SiTON), et en particulier le $SiSn_{0,87}O_{1,2}N_{1,72}$ ; ainsi que les oxynitrures-carbures de formule typique $Si_aSn_bC_cO_yN_z$ avec a>0, b>0, a+b$\leq$2, 0<c<10, 0<y<24, 0<z<17;

o les nitrures de type $Si_xN_y$ (en particulier avec x=3 et y=4), $Sn_xN_y$ (en particulier avec x=3 et y=4), $Zn_xN_y$ (en particulier avec x=3 et y=2), $Li_{3-x}M_xN$ (avec $0 \leq x \leq 0,5$ pour M=Co, $0 \leq x \leq 0,6$ pour M=Ni, $0 \leq x \leq 0,3$ pour M=Cu); $Si_{3-x}M_xN_4$ avec M=Co ou Fe et $0 \leq x \leq 3$.

o les oxydes $SnO_2$, SnO, $Li_2SnO_3$, $SnSiO_3$, $Li_xSiO_y$(x>=0 et 2>y>0), $Li_4Ti_5O_{12}$, $TiNb_2O_7$, $Co_3O_4$, $SnB_{0,6}P_{0,4}O_{2,9}$ et $TiO_2$,

o les oxydes composites $TiNb_2O_7$ comprenant entre 0% et 10% massique de carbone, de préférence le carbone étant choisi parmi le graphène et les nanotubes de carbone.

**7.** Procédé selon l'une quelconque des revendications précédentes, dans lequel après l'étape (d) ou l'étape (e) on dépose, de préférence par la technique de dépôt de couches atomiques ALD ou par voie chimique en solution CSD, lors d'une étape (f) une couche d'un matériau isolant électriquement sur et à l'intérieur des pores de la couche poreuse, ledit matériau isolant électriquement étant de préférence choisi parmi l'$Al_2O_3$, $SiO_2$, $ZrO_2$.

8. Procédé selon l'une quelconque des revendications 1 à 6, dans lequel après l'étape (d) ou l'étape (e) on dépose, de préférence par ALD ou par voie chimique en solution CSD, lors d'une étape (f) une couche d'un matériau conducteur ionique choisi parmi le $Li_3PO_4$, le $Li_3BO_3$, le lithium lanthane zirconium oxyde, de préférence le $Li_7La_3Zr_2O_{12}$, sur et à l'intérieur des pores de la couche poreuse.

9. Utilisation d'un procédé selon l'une quelconque des revendications 1 à 8 pour la fabrication d'électrodes poreuses, dans des dispositifs électroniques, électriques ou électrotechniques, et de préférence dans des dispositifs sélectionnés dans le groupe formé par : les batteries, les condensateurs, les supercondensateurs, les capacités, les résistances, les inductances, les transistors, les cellules photovoltaïques.

10. Procédé de fabrication d'une batterie, mettant en oeuvre le procédé de fabrication d'une électrode poreuse selon l'une des revendications 1 à 8.

11. Procédé de fabrication d'une batterie selon la revendication 10 et comprenant les étapes de :

(1) Approvisionnement d'une suspension colloïdale comprenant des agrégats ou des agglomérats de nanoparticules d'au moins un matériau de cathode de diamètre primaire moyen $D_{50}$ inférieur ou égal à 50 nm ;
(2) Approvisionnement d'une suspension colloïdale comprenant des agrégats ou des agglomérats de nanoparticules d'au moins un matériau d'anode de diamètre primaire moyen $D_{50}$ inférieur ou égal à 50 nm ;
(3) Approvisionnement d'au moins deux substrats conducteurs plats, de préférence métalliques, lesdits substrats conducteurs pouvant servir comme collecteurs de courant de la batterie,
(4) Dépôt d'au moins une couche de cathode, respectivement d'anode, par dip-coating, par le procédé d'impression par jet d'encre, par raclage, par enduction au rouleau, par enduction au rideau ou par électrophorèse, de préférence par électrodéposition galvanostatique par courants pulsés, à partir de ladite suspension de nanoparticules de matériau approvisionnée à l'étape (1), respectivement à l'étape (2), sur ledit substrat approvisionné à l'étape (3),
(5) Séchage de la couche ainsi obtenue à l'étape (4),
(6) Optionnellement, déposition par ALD d'une couche d'un matériau isolant électriquement sur et à l'intérieur des pores de la couche de cathode, et/ou d'anode obtenue à l'étape (5),
(7) Déposition d'un film, de préférence poreux, préférentiellement mésoporeux, d'un matériau isolant électriquement éventuellement conducteur ionique à partir d'une suspension colloïdale de nanoparticules de ce matériau agrégées ou agglomérées de diamètre primaire moyen $D_{50}$ inférieur ou égal à 50 nm et de diamètre moyen $D_{50}$ d'environ 100 nm sur la couche de cathode, respectivement d'anode obtenue à l'étape (5) et/ou l'étape (6),
(8) Séchage de la couche ainsi obtenue à l'étape (7),
(9) Réalisation d'un empilement comprenant une succession alternée des couches de cathode et d'anode, de préférence décalé latéralement,
(10) Pressage à chaud des couches d'anode et de cathode obtenues à l'étape (9) de manière à juxtaposer les films obtenus à l'étape (8) présents sur les couches d'anode et de cathode, et à obtenir un empilement assemblé,
(11) Imprégnation de la structure obtenue à l'étape (10) par une phase porteuse d'ions de lithium conduisant à l'obtention d'une structure imprégnée.

12. Procédé selon l'une quelconque des revendications 10 à 11, dans lequel entre l'étape -10- et -11- :

- on dépose successivement, de manière alternée, sur l'empilement assemblé, un système d'encapsulation formé par une succession de couches, à savoir une séquence, de préférence de z séquences, comprenant :

  ■ une première couche de recouvrement, de préférence choisi parmi le parylène, le parylène de type F, le polyimide, les résines epoxy, le silicone, le polyamide et/ou un mélange de ceux-ci, déposée sur l'empilement assemblé,
  ■ une deuxième couche de recouvrement composée d'une matière électriquement isolante, déposée par dépôt de couches atomiques sur ladite première couche de recouvrement,
  ■ cette séquence pouvant être répétée z fois avec z ≥ 1,

- on dépose une dernière couche de recouvrement sur cette succession de couches d'un matériau choisi parmi la résine époxy, le polyéthylène naphtalate (PEN), le polyimide, le polyamide, le polyuréthane, le silicone, la silice sol-gel ou la silice organique,

- on découpe selon deux plans de coupe, l'empilement assemblé ainsi encapsulé pour mettre à nue sur chacun des plans de coupes des connexions anodiques et cathodiques de l'empilement assemblé, de sorte que le système d'encapsulation revêt quatre des six faces dudit empilement assemblé, de préférence de manière continue, de manière à obtenir une batterie élémentaire,

et après l'étape -11-,

- on dépose successivement, sur et autour, de ces connexions anodiques et cathodiques :

  ▪ une première couche d'un matériau chargé en graphite, de préférence en résine époxy chargée de graphite,
  ▪ une deuxième couche comprenant du cuivre métallique obtenue à partir d'une encre chargée en nanoparticules de cuivre déposée sur la première couche,

- on traite thermiquement les couches obtenues, de préférence par lampe flash infrarouge, de manière à obtenir un recouvrement des connexions cathodique et anodique par une couche de cuivre métallique,

- éventuellement, on dépose successivement, sur et autour, de cette couche de cuivre métallique :

  ▪ une première couche d'un alliage étain-zinc déposé, de préférence par trempage dans un bain d'étain-zinc en fusion, afin d'assurer l'étanchéité de la batterie à moindre coût, et
  ▪ une deuxième couche à base d'étain pur déposée par électrodéposition ou une deuxième couche comprenant un alliage à base d'argent, de palladium et de cuivre déposée sur cette première couche d'un alliage étain-zinc.

13. Electrode poreuse de porosité supérieure à 30% en volume comprenant des pores de diamètre moyen inférieur à 80 nm, de préférence inférieur à 50 nm, un diamètre primaire de particules inférieur à 30 nm, **caractérisée en ce qu'**elle comprend une épaisseur inférieure à 100 $\mu$m, de préférence inférieure à 50 $\mu$m et encore plus préférentiellement inférieure à 10 $\mu$m et est exempte de liant.

14. Electrode poreuse selon la revendication 13, **caractérisée en ce que** lesdits pores sont imprégnés par un électrolyte, de préférence une phase porteuse d'ions de lithium telle qu'un liquide ionique contenant des sels de lithium, possiblement dilué avec un solvant organique ou un mélange de solvants organiques contenant un sel de lithium pouvant être différent de celui dissous dans le liquide ionique.

15. Batterie comprenant au moins une électrode poreuse susceptible d'être obtenue par le procédé selon l'une quelconque des revendications 1 à 8.

**Patentansprüche**

1. Verfahren zur Herstellung einer porösen Elektrode, wobei die Elektrode eine auf einem Substrat abgeschiedene Schicht umfasst, wobei die Schicht frei von Bindemittel ist und eine Porosität von mehr als 30 Vol.-% und vorzugsweise weniger als 50 Vol.-% sowie Poren mit einem durchschnittlichen Durchmesser von weniger als 50 nm aufweist, wobei das Verfahren **dadurch gekennzeichnet ist, dass**:

   (a) eine kolloidale Suspension bereitgestellt wird, die Aggregate oder Agglomerate von Nanopartikeln mindestens eines Materials P mit einem durchschnittlichen Primärdurchmesser $D_{50}$ von weniger als oder gleich 80 nm, und vorzugsweise weniger als oder gleich 50 nm, umfasst, wobei diese Aggregate oder Agglomerate einen durchschnittlichen Durchmesser zwischen 80 nm und 300 nm (vorzugsweise zwischen 100 nm und 200 nm) aufweisen,
   (b) ein Substrat bereitgestellt wird,
   (c) auf dem Substrat eine poröse Elektrodenschicht abgeschieden wird, die vorzugsweise mesoporös ist, durch Elektrophorese, durch Tintenstrahldruck, durch Schaben, durch Walzenbeschichten, durch Vorhangbeschichten oder durch Tauchbeschichten, aus der in Schritt (a) zugeführten kolloidalen Suspension,
   (d) die in Schritt (c) erhaltene Schicht wird getrocknet, vorzugsweise unter einem Luftstrom,
   (e) optional, Konsolidierung der in Schritt (d) erhaltenen porösen, vorzugsweise mesoporösen Elektrodenschicht durch Pressen und/oder Erhitzen.

2. Verfahren zur Herstellung einer porösen Elektrode nach Anspruch 1, bei dem:

(a1) eine kolloidale Suspension zugeführt wird, die Nanopartikel aus mindestens einem Material P mit einem durchschnittlichen Primärdurchmesser $D_{50}$ kleiner oder gleich 80 nm und vorzugsweise kleiner oder gleich umfasst 50 nm;

(a2) die in der kolloidalen Suspension vorhandenen Nanopartikel werden destabilisiert, um Aggregate oder Agglomerate von Partikeln mit einem durchschnittlichen Durchmesser zwischen 80 nm und 300 nm, vorzugsweise zwischen 100 nm und 200 nm, zu bilden, wobei die Destabilisierung vorzugsweise durch Zugabe eines Destabilisierungsmittels erfolgt wie ein Salz, vorzugsweise LiOH;

(b) Bereitstellen eines Substrats;

(c) eine mesoporöse Elektrodenschicht wird auf dem Substrat durch Elektrophorese, durch Tintenstrahldruck, durch Schaben, durch Walzenbeschichten, durch Vorhangbeschichten oder durch Tauchbeschichten aus der kolloidalen Suspension abgeschieden, die die in Schritt (a2) erhaltenen Nanopartikelaggregate oder Nanopartikelagglomerate umfasst;

(d) die Schicht wird getrocknet, vorzugsweise unter einem Luftstrom;

(e) optional Konsolidierung der in Schritt (d) erhaltenen mesoporösen Elektrodenschicht durch Pressen und/oder Erhitzen.

3. Verfahren nach einem der Ansprüche 1 bis 2, bei dem der Durchmesser der Nanopartikel zwischen 10 nm und 50 nm, vorzugsweise zwischen 10 nm und 30 nm, liegt.

4. Verfahren nach einem der Ansprüche 1 bis 3, bei dem der durchschnittliche Porendurchmesser zwischen 2 nm und 80 nm, vorzugsweise zwischen 2 nm und 50 nm, vorzugsweise zwischen 6 nm und 30 nm und noch bevorzugter zwischen 8 nm und 20 nm liegt nm.

5. Verfahren nach einem der Ansprüche 1 bis 4, bei dem die Elektrode eine Kathode ist und das Material P aus der Gruppe ausgewählt wird, die gebildet wird durch:

  o die Oxide $LiMn_2O_4$, $Li_{1+x}Mn_{2-x}O_4$ mit 0 < x < 0.15, $LiCoO_2$, $LiNiO_2$, $LiMn_{1.5}Ni_{0.5}O_4$, $LiMn_{1.5}Ni_{0.5-x}X_xO_4$ wobei X aus Al, Fe, Cr, Co, Rh, Nd, und anderen seltenen Erden wie Sc, Y, Lu, La, Ce, Pr, Pm, Sm, Eu, Gd, Tb, Dy, Ho, Er, Tm, Yb ausgewählt ist, und wobei 0 < x < 0.1, $LiMn_{2-x}M_xO_4$ mit M = Er, Dy, Gd, Tb, Yb, Al, Y, Ni, Co, Ti, Sn, As, Mg oder ein Gemisch dieser Elemente und wobei 0 < x < 0.4, $LiFeO_2$, $LiMn_{1/3}Ni_{1/3}Co_{1/3}O_2$, $LiNi_{0.8}Co_{0.15}Al_{0.05}O_2$, $LiAl_xMn_{2-x}O_4$ mit $0 \le x < 0.15$, $LiNi_{1/x}Co_{1/y}Mn_{1/z}O_2$ mit x+y+z =10;
  o Phosphate der Formel $LiFePO_4$, $LiMnPO_4$, $LiCoPO_4$, $LiNiPO_4$, $Li_3V_2(PO_4)_3$; Phosphate der Formel $LiMM'PO_4$, worin M und M' (M ≠ M') aus Fe, Mn, Ni, Co, V ausgewählt sind;
  o alle lithiierten Formen der folgenden Chalkogenide: $V_2O_5$, $V_3O_8$, $TiS_2$, Titanoxysulfide ($TiO_yS_z$ mit z=2-y und $0.3 \le y \le 1$), Wolframoxysulfide ($WO_yS_z$ mit 0.6<y<3 und 0.1<z<2), CuS, $CuS_2$, vorzugsweise $Li_xV_2O_5$ mit 0 <x≤2, $Li_xV_3O_8$ mit $0 < x \le 1.7$, $Li_xTiS_2$ mit $0 < x \le 1$, Titan- und Lithiumoxysulfide $Li_xTiO_yS_z$ mit z=2-y, $0.3 \le y \le 1$, $Li_xWO_yS_z$, $Li_xCuS$, $Li_xCuS_2$.

6. Verfahren nach einem der Ansprüche 1 bis 5, bei dem die Elektrode eine Anode ist und das Material P aus der Gruppe ausgewählt wird, die besteht aus:

  o Kohlenstoffnanoröhren, Graphen, Graphit;
  o Lithiiertes Eisenphosphat (der typischen Formel $LiFePO_4$);
  o gemischte Oxinitride aus Silizium und Zinn (typische Formel $Si_aSn_bO_yN_z$ mit a>0, b>0, a+b≤2, 0<y≤4, 0<z≤3) (auch SiTON genannt), und insbesonde $SiSn_{0.87}O_{1.2}N_{1.72}$; sowie die Oxynitrid-Carbide der typischen Formel $Si_aSn_bC_cO_yN_z$ mit a>0, b>0, a+b≤2, 0<c<10, 0<y<24, 0<z<17;
  o Nitride vom Typ $Si_xN_y$ (insbesondere mit x=3 und y=4), $Sn_xN_y$ (insbesondere mit x=3 und y=4), $Zn_xN_y$ (insbesondere mit x=3 und y=2), $Li_{3-x}M_xN$ (mit $0 \le x \le 0.5$ für M=Co, $0 \le x \le 0.6$ für M=Ni, $0 \le x \le 0.3$ für M=Cu); $Si_{3-x}M_xN_4$ mit M=Co oder Fe und $0 \le x \le 3$;
  o Oxide $SnO_2$, SnO, $Li_2SnO_3$, $SnSiO_3$, $Li_xSiO_y$ (x>=0 und 2>y>0), $Li_4Ti_5O_{12}$, $TiNb_2O_7$, $Co_3O_4$, $SnB_{0.6}P_{0.4}O_{2.9}$ und $TiO_2$,
  o Gemischte Oxide $TiNb_2O_7$, die zwischen 0% und 10% Massenprozente Kohlenstoff enthalten, vorzugsweise Kohlenstoff, der aus Graphen und Kohlenstoffnanoröhren ausgewählt ist.

7. Verfahren nach einem der vorstehenden Ansprüche, bei dem nach Schritt (d) oder Schritt (e) während eines Schritts (f) auf und innerhalb der Poren der porösen Schicht eine elektrisch isolierende Schicht aus einem Material, vorzugsweise durch ALD oder aus einer chemischen Lösung (CSD), abgeschieden wird, das vorzugsweise ausgewählt ist aus $Al_2O_3$, $SiO_2$ und $ZrO_2$.

8. Verfahren nach einem der Ansprüche 1 bis 6, bei dem nach Schritt (d) oder Schritt (e) während eines Schritts (f) auf und innerhalb der Poren der porösen Schicht eine ionenleitfähige Schicht aus einem Material, vorzugsweise durch ALD oder aus einer chemischen Lösung (CSD), abgeschieden wird, die vorzugsweise ausgewählt ist aus $Li_3PO_4$, $Li_3BO_3$, Lithium-Lanthanum-Zirconiumoxid, vorzugsweise $Li_7La_3Zr_2O_{12}$.

9. Verwendung eines Verfahrens nach einem der Ansprüche 1 bis 8 zur Herstellung von porösen Dünnschichtelektroden, in elektronischen, elektrischen oder elektrotechnischen Geräten und vorzugsweise in Geräten ausgewählt aus der Gruppe bestehend aus: Batterien, Kondensatoren, Superkondensatoren, Widerstände, Induktivitäten, Transistoren, Photovoltaikzellen.

10. Verfahren zur Herstellung einer Batterie, das das Verfahren zur Herstellung einer porösen Elektrode nach einem der Ansprüche 1 bis 8 umsetzt.

11. Verfahren zur Herstellung einer Batterie nach Anspruch 10 und umfassend die Schritte:

(1) Zuführen einer kolloidalen Suspension, die Aggregate oder Agglomerate von Nanopartikeln von mindestens einem Kathodenmaterial mit einem durchschnittlichen Primärdurchmesser $D_{50}$ von weniger als oder gleich 50 nm umfasst;
(2) Bereitstellung einer kolloidalen Suspension, die Nanopartikel aus mindestens einem Anodenmaterial mit einem durchschnittlichen Primärdurchmesser $D_{50}$ von weniger als oder gleich 50 nm umfasst;
(3) Bereitstellung von mindestens zwei flachen leitfähigen Substraten, vorzugsweise aus Metall, wobei die leitfähigen Substrate als Stromabnehmer der Batterie dienen können;
(4) Aufbringen mindestens einer Kathoden- bzw. Anodenschicht durch Tintenstrahldruck, durch Schaben, durch Walzenbeschichten, durch Vorhangbeschichten oder durch Elektrophorese, vorzugsweise durch galvanostatische Elektroabscheidung durch gepulste Ströme, aus der in Schritt (1) bzw. in Schritt (2) erhaltenen Suspension von Nanopartikeln des Materials auf dem in Schritt (3) erhaltenen Substrat;
(5) Trocknen der so in Schritt (4) erhaltenen Schicht;
(6) Optional Abscheidung einer Schicht aus einem elektrisch isolierenden Material durch ALD auf und innerhalb der Poren der in Schritt (5) erhaltenen Kathoden- und/oder Anodenschicht;
(7) Abscheidung durch Elektrophorese eines porösen, vorzugsweise mesoporösen Films aus einem elektrisch isolierenden und eventuell ionenleitenden Material, aus einer kolloidalen Suspension von Nanopartikeln dieses agglomerierten oder aggregierten Materials, mit einem durchschnittlichen Primärdurchmesser $D_{50}$ von kleiner oder gleich 50 nm und einem durchschnittlichen Durchmesser $D_{50}$ von etwa 100 nm auf dem Kathodenschicht bzw. der in Schritt (5) und/oder oder Schritt (6) erhaltenen Anodenschicht;
(8) Trocknen der so in Schritt (7) erhaltenen Schicht;
(9) Herstellung eines Stapels, bestehend aus einer abwechselnden Abfolge von Kathoden und Anodenschichten, vorzugsweise seitlich versetzt;
(10) Heißpressen der in Schritt (9) erhaltenen Anoden- und Kathodenschichten, um so die in Schritt (8) erhaltenen Filme, die auf den Anoden- und Kathodenschichten vorhanden sind, aufeinander anzuordnen, und um eine zusammengesetzte Anordnung zu erhalten;
(11) Imprägnieren von die in Schritt (10) erhaltene Struktur mit einer Trägerphase aus Lithiumionen, was zum Erhalt einer imprägnierten Struktur führt.

12. Verfahren nach einem der Ansprüche 10 bis 11, bei dem zwischen Schritt -10- und Schritt 11:

- nacheinander abwechselnd auf der zusammengesetzten Anordnung ein Einkapselungssystem abgeschieden wird, das aus einer Abfolge von Schichten besteht, nämlich aus einer Sequenz, und vorzugsweise z Sequenzen, umfassend

o eine erste Deckschicht, die vorzugsweise aus Parylen, Parylen vom Typ F, Polyimid, Epoxidharzen, Silikon, Polyamid und/oder Gemischen davon, auf der zusammengesetzten Anordnung abgeschieden wird;
o eine zweite Deckschicht aus einem elektrisch isolierenden Material, durch ALD (Atomic Layer Deposition) auf der ersten Deckschicht aufgetragen wird;
o diese Sequenz kann z-mal wiederholt werden, wobei $z \geq 1$ ist;

- auf diese Abfolge von Schichten eine letzte Deckschicht aus einem Material aufgetragen wird, das aus Epoxidharz, Polyethylennaphtalat (PEN), Polyimid, Polyamid, Polyurethan, Silikon, Sol-Gel-Siliziumdioxid, organischem Siliziumdioxid ausgewählt wird,

- die so eingekapselte zusammengesetzte Anordnung nach zwei Schnittebenen abgeschnitten wird, um auf jeder der Schnittebenen anodische und kathodische Kontakte freizulegen, sodass das Einkapselungssystem vier der sechs Flächen der besagten eingekapselten zusammengesetzen Anordnung beschichtet, vorzugsweise kontinuierlich, um eine Elementarbatterie zu erhalten;

und bei der nach Schritt -11-

- nacheinander auf und um diese Anoden- und Kathodenkontakte herum:

o eine erste Schicht eines graphitgefüllten Materials abgeschieden wird, vorzugsweise ein graphitgefülltes Epoxidharz,

o auf die erste Schicht eine zweite Schicht abgeschieden wird, die metallisches Kupfer enthält, das aus einer mit Kupfer-Nanopartikeln beladenen Tinte erhalten wird,

- die so erhaltenen Schichten werden thermisch behandelt, vorzugsweise mit einer Infrarot-Blitzlichtlampe, um eine Bedeckung der kathodischen und anodischen Kontakte durch metallisches Kupfer zu erhalten;
- eventuell wird auf und um diese metallische Kuperschicht herum abgeschieden:

o eine erste Schicht einer Zinn-Zink-Legierung, die vorzugsweise durch Eintauchen in ein Zinn-Zink-Schmelzbad erhalten wird, um die Dichtigkeit der Batterie auf billige Weise zu erhalten,

o eine zweite Schicht auf Zinn-Basis durch Elektro-Abscheidung, oder eine zweite Schicht, die eine Legierung auf Silber-, Palladium- und Kupferbasis enthält, die auf die erste Schicht abgeschieden wird.

13. Poröse Elektrode mit einer Porosität von mehr als 30 Vol.-%, umfassend Poren mit einem durchschnittlichen Durchmesser von weniger als 80 nm, vorzugsweise weniger als 50 nm, einem Primärpartikeldurchmesser von weniger als 30 nm, **dadurch gekennzeichnet, dass** sie eine Dicke von weniger als 10 $\mu$m aufweist und frei ist von Bindemittel.

14. Poröse Elektrode nach Anspruch 13, **dadurch gekennzeichnet, dass** die Poren mit einem Elektrolyten imprägniert sind, vorzugsweise einer Phase, die Lithiumionen trägt, wie etwa einer ionischen Flüssigkeit, die Lithiumsalze enthält, möglicherweise verdünnt in einem organischen Lösungsmittel oder einer Mischung organischer Lösungsmittel, die ein Lithiumsalz enthält, das sich von dem in der ionischen Flüssigkeit gelösten unterscheiden kann.

15. Batterie, die mindestens eine poröse Elektrode umfasst, die durch das Verfahren nach einem der Ansprüche 1 bis 8 erhalten werden kann.

## Claims

1. Method for producing a porous electrode, said electrode comprising a layer deposited on a substrate, said layer being binder-free and having a porosity of more than 30 volume %, and preferably less than 50 volume %, and pores having an average diameter of less than 50 nm, said method being **characterized in that**:

(a) a colloidal suspension is provided, containing aggregates or agglomerates of nanoparticles of at least one material P having an average primary diameter $D_{50}$ of less than or equal to 80 nm, and preferably less than or equal to 50 nm, said aggregates or agglomerates having an average diameter comprised between 80 nm and 300 nm (preferably between 100 nm and 200 nm),
(b) a substrate is provided,
(c) a porous, preferably mesoporous, electrode layer is deposited on said substrate by electrophoresis, by ink-jet, by doctor blade, by roll coating, by curtain coating or by dip-coating, from said colloidal suspension provided in step (a);
(d) said layer obtained in step (c) is dried, preferably in an air flow,
(e) optionally, consolidation of the porous, preferably mesoporous electrode layer obtained in step (d) by pressing and/or heating.

2. Method of manufacturing a porous electrode according to claim 1, wherein:

(a1) a colloidal suspension is provided including nanoparticles of at least one material P with a primary diameter $D_{50}$ less than or equal to 80 nm, and preferably less than or equal to 50 nm,
(a2) the nanoparticles present in said colloidal suspension are destabilized so as to form aggregates or agglomerates of particles with an average diameter comprised between 80 nm and 300 nm, preferably between 100 nm and 200 nm, said destabilization being done preferably by adding a destabilizing agent such as a salt, preferably LiOH;

(b) a substrate is provided,

(c) a mesoporous electrode layer is deposited on said substrate by electrophoresis, by ink-jet, by doctor blade, by roll coating, by curtain coating or by dip-coating, from said colloidal suspension comprising the aggregates or agglomerates of nanoparticles obtained in step (a2),

(d) said layer is dried, preferably in an air flow,

(e) optionally, consolidation of the mesoporous electrode layer obtained in step (d) by pressing and/or heating.

3. Method according to one of claims 1 to 2, wherein the diameter of said nanoparticles is comprised between 10 nm and 50 nm, preferably between 10 nm and 30 nm.

4. Method according to one of claims 1 to 3, wherein the average diameter of the pores is comprised between 2 nm and 80 nm, preferable comprised between 2 nm and 50 nm, preferably comprised between 6 nm and 30 nm and even more preferably between 8 nm and 20 nm.

5. Method according to any of claims 1 to 4, wherein said electrode is a cathode, and said material P is chosen from the group formed by:

○ oxides $LiMn_2O_4$, $Li_{1+x}Mn_{2-x}O_4$ with $0< x < 0.15$, $LiCoO_2$, $LiNiO_2$, $LiMn_{1.5}Ni_{0.5}O_4$, $LiMn_{1.5}Ni_{0.5-x}X_xO_4$ where X is selected from Al, Fe, Cr, Co, Rh, Nd, other rare earths such as Sc, Y, Lu, La, Ce, Pr, Pm, Sm, Eu, Gd, Tb, Dy, Ho, Er, Tm, Yb, and where $0 < x < 0.1$, $LiMn_{2-x}M_xO_4$ with M = Er, Dy, Gd, Tb, Yb, Al, Y, Ni, Co, Ti, Sn, As, Mg or a mixture of these compounds and where $0 < x < 0.4$, $LiFeO_2$, $LiMn_{1/3}Ni_{1/3}Co_{1/3}O_2$, $LiNi_{0.8}Co_{0.15}Al_{0.05}O_2$, $LiAl_xMn_{2-x}O_4$ with $0 \le x < 0.15$, $LiNi_{1/x}Co_{1/y}Mn_{1/z}O_2$ with x+y+z =10;

○ phosphates $LiFePO_4$, $LiMnPO_4$, $LiCoPO_4$, $LiNiPO_4$, $Li_3V_2(PO_4)_3$; phosphates of formula $LiMM'PO_4$, with M and M' (M ≠ M') selected from Fe, Mn, Ni, Co, V;

○ all lithium forms of the following chalcogenides: $V_2O_5$, $V_3O_3$, $TiS_2$, titanium oxysulfides ($TiO_yS_z$ with z=2-y and $0.3{\le}y{\le}1$), tungsten oxysulfides ($WO_yS_z$ with 0.6<y<3 and 0.1<z<2), CuS, $CuS_2$, preferably $Li_xV_2O_5$ with $0 <x{\le}2$, $Li_xV_3O_8$ with $0 < x \le 1.7$, $Li_xTiS_2$ with $0 < x \le 1$, titanium oxysulfides and lithium oxysulfides $Li_xTiO_yS_z$ with z=2-y, $0.3{\le}y{\le}1$, $Li_xWO_yS_z$, $Li_xCuS$, $Li_xCuS_2$.

6. Method according to any of claims 1 to 5, wherein said electrode is an anode, and said material P is chosen from the group formed by:

○ carbon nanotubes, graphene, graphite;

○ lithium iron phosphate (of typical formula $LiFePO_4$);

○ mixed silicon and tin oxinitrides (of typical formula $Si_aSn_bO_yN_z$ with a>0, b>0, a+b≤2, 0<y≤4, 0<z≤3) (also called SiTON), and in particular $SiSn_{0.87}O_{1.2}N_{1.72}$; as well as the oxynitride-carbides of typical formula $Si_aSn_bC_cO_yN_z$ with a>0, b>0, a+b≤2, 0<c<10, 0<y<24, 0<z<17;

○ nitrides of the type $Si_xN_y$ (in particular with x=3 and y=4), $Sn_xN_y$ (in particular with x=3 and y=4), $Zn_xN_y$ (in particular with x=3 and y=2), $Li_{3-x}M_xN$ (with 0≤x≤0.5 for M=Co, 0≤x≤0.6 for M=Ni, 0≤x≤0.3 for M=Cu); $Si_{3-x}M_xN_4$ with M=Co or Fe and 0≤x≤3.

○ oxides $SnO_2$, SnO, $Li_2SnO_3$, $SnSiO_3$, $Li_xSiO_y$ (x>=0 and 2>y>0), $Li_4Ti_5O_{12}$, $TiNb_2O_7$, $Co_3O_4$, $SnB_{0.6}P_{0.4}O_{2.9}$ and $TiO_2$,

○ composite oxides $TiNb_2O_7$ comprising between 0% and 10% carbon by weight, preferably carbon being chosen from graphene and the carbon nanotubes.

7. Method according to any of the preceding claims, wherein after step (d) or step (e) is deposited, preferably by atomic layer deposition ALD or chemically from a solution CSD, during a step (f) a layer of electrically-insulating material on and inside the pores of the porous layer, said electrically-insulating material being preferably chosen from $Al_2O_3$, $SiO_2$, $ZrO_2$.

8. Method according to any of claims 1 to 6, wherein after step (d) or after step (e), is deposited, preferably by ALD or by CSD, during a step (f) a layer of ionic conductive material chosen from $Li_3PO_4$, $Li_3BO_3$, lithium lanthanum zirconium oxide, preferably $Li_7La_3Zr_2O_{12}$, on and inside the pores of the porous layer.

9. Use of a process according to any one of claims 1 to 8 for the manufacture of porous electrodes, in electronic, electrical or electrotechnical devices and preferably in devices selected in the group composed of batteries, capacitors, supercapacitors, capacities, resistors, inductors, transistors, photovoltaic cells.

10. Method for manufacturing a battery, implementing the manufacturing method of a porous electrode according to one of claims 1 to 8.

11. Process for manufacturing a battery according to claim 10 and comprising the steps of:

(1) Providing a colloidal suspension comprising aggregates or agglomerates of nanoparticles of at least one cathode material with an average primary diameter $D_{50}$ less than or equal to 50 nm;
(2) Providing a colloidal suspension comprising aggregates or agglomerates of nanoparticles of at least one anode material with an average primary diameter $D_{50}$ less than or equal to 50 nm.
(3) Providing of at least two flat conducting substrates, preferably metal, said conducting substrates can be used as current collectors of the battery,
(4) Deposition of at least one layer of cathode, respectively anode, by dip-coating, by ink-jet, by doctor blade, by roll coating, by curtain coating or by electrophoresis, preferably by pulsed-current galvanostatic electrodeposition, from said suspension of nanoparticles of material provided in step (1), respectively in step (2), on said substrate provided in step (3),
(5) Drying the layer thus obtained in the step (4),
(6) Optionally, deposition by ALD of a layer of electrically-insulating material on and inside the pores of the layer of cathode, and/or of anode in step (5),
(7) Deposition of a film, preferable porous, preferably mesoporous, of an electrically-insulating material possibly ion-conducting from a colloidal suspension of nanoparticles of this aggregated or agglomerated material of average primary diameter $D_{50}$ less than or equal to 50 nm and of an average diameter $D_{50}$ of about 100 nm on the layer of cathode, respectively anode obtained in step (5) and/or step (6),
(8) Drying the layer thus obtained in the step (7),
(9) Realization of a stack comprising an alternating succession of layers of cathode and anode, preferably offset laterally,
(10) Hot pressing of the layers of anode and cathode obtained in step (9) in such a way as to juxtapose the films obtained in step (8) present on the layers of anode and cathode, and to obtain an assembled stack,
(11) Impregnation of the structure obtained in step (10) by a phase carrying lithium ions leading to the obtaining of an impregnated structure.

12. Method according to any of claims 10 to 11, wherein between step -10- and -11-:

- is deposited successively, alternating, on the assembled stack, an encapsulation system formed by a succession of layers, namely a sequence, preferably z sequences, comprising:

    ■ a first covering layer, preferably chosen from parylene, parylene of the F type, polyimide, epoxy resins, silicone, polyamide and/or a mixture of the latter, deposited on the assembled stack,
    ■ a second covering layer comprised of an electrically-insulating material, deposited by atomic layer deposition on said first covering layer,
    ■ this sequence can be repeated z times with z ≥ 1,

- a last covering layer is deposited onto this succession of layers of a material chosen from epoxy resin, polyethylene naphtalate (PEN), polyimide, polyamide, polyurethane, silicone, sol-gel silica or organic silica,
- the assembled stack so encapsulated is cut along two cutting planes to expose on each one of the cutting planes anode and cathode connections of the assembled stack, in such a way that the encapsulation system covers four of the six faces of said assembled stack, preferably continuously, in such a way as to obtain an elementary battery,
and after step -11-,
- is deposited successively, on and around these anode and cathode connections:

    ■ a first layer of a material filled with graphite, preferably epoxy resin filled with graphite,
    ■ a second layer comprising metallic copper obtained from an ink filled with nanoparticles of copper deposited on the first layer,

- the layers obtained are thermally treated, preferably by infrared flash lamp in such a way as to obtain a covering of the cathode and anode connections by a layer of metallic copper,

- possibly, is deposited successively, on and around this layer of metallic copper:

 - a first layer of a tin-zinc alloy deposited, preferably by dipping in a molten tin-zinc bath, so as to ensure the tightness of the battery at least cost, and
 - a second layer with a pure tin base deposited by electrodeposition or a second layer comprising an alloy with a silver, palladium and copper base deposited on this first layer of a tin-zinc alloy.

13. Porous electrode with a porosity greater than 30% by volume comprising pores with an average diameter less than 80 nm, preferably less than 50 nm, a primary particle diameter less than 30 nm, **characterized in that** it comprises a thickness less than 100 $\mu$m, preferably less than 50 $\mu$m and more preferably less than 10 $\mu$m and is binder-free.

14. Porous electrode according to claim 13, **characterized in that** said pores are impregnated by an electrolyte, preferably a phase carrying lithium ions such as an ionic liquid containing lithium salts, possibly diluted with an organic solvent or a mixture of organic solvents containing a lithium salt that can be different from the one dissolved in the ionic liquid.

15. Battery comprising at least one porous electrode obtainable by the method according to any of claims 1 to 8.

Figure 1(a)

Figure 1(b)

Figure 2(a)

Figure 2(b)

Figure 3

Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018108904 A1
- US 2011269025 A1
- US 2014178759 A1
- WO 02075826 A
- EP 2774194 B1
- US 2010209783 A1

- WO 2013064781 A
- WO 2013064779 A
- WO 2017115032 A
- WO 2016001584 A
- WO 2016001588 A
- WO 2014131997 A

**Littérature non-brevet citée dans la description**

- *CHEMICAL ABSTRACTS,* 1633-22-3